(19) Europäisches Patentamt
European Patent Office
Office européen des brevets

(11) **EP 4 067 821 A1**

(12) **EUROPEAN PATENT APPLICATION**
published in accordance with Art. 153(4) EPC

(43) Date of publication:
**05.10.2022 Bulletin 2022/40**

(51) International Patent Classification (IPC):
***G01C 21/20*** (2006.01)

(21) Application number: **19954320.8**

(86) International application number:
**PCT/CN2019/122097**

(22) Date of filing: **29.11.2019**

(87) International publication number:
**WO 2021/102955 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Longgang**
**Shenzhen, Guangdong 518129 (CN)**

(72) Inventors:
• **TAI, Yuzhuo**
**Shenzhen, Guangdong 518129 (CN)**
• **CHU, Jingkai**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **PATH PLANNING METHOD FOR VEHICLE AND PATH PLANNING APPARATUS FOR VEHICLE**

(57) This application provides a vehicle path planning method and a path planning apparatus. The path planning method includes: detecting a first operation performed by a user to indicate to enable automatic parking (610); displaying location information of a candidate parking spot on a display in response to the first operation (620); detecting a second operation performed by the user to indicate a target parking spot in the candidate parking spot (630); and displaying a target traveling path on the display in response to the second operation, where the target traveling path is used by a vehicle to travel from an initial parking pose indicating automatic parking enabling to a target parking pose in the target parking spot, the target traveling path is obtained by performing segmented planning on a path between the initial parking pose and the target parking pose based on an intermediate pose of the vehicle, and when the vehicle is in the intermediate pose, at least a part of the vehicle is located outside the target parking spot (640). Segmented planning is performed on a parking path of the vehicle through the intermediate pose, so that a success rate of path planning of the vehicle is improved.

FIG. 7

**Description**

**TECHNICAL FIELD**

This application relates to the automobile field, and more specifically, to a vehicle path planning method and a vehicle path planning apparatus.

**BACKGROUND**

Artificial intelligence (artificial intelligence, AI) is a theory, a method, a technology, and an application system that simulate, extend, and expand human intelligence by using a digital computer or a machine controlled by a digital computer, sense an environment, obtain knowledge, and use the knowledge to obtain a best result. In other words, artificial intelligence is a branch of computer science, and is intended to understand essence of intelligence and produce a new intelligent machine that can react in a manner similar to human intelligence. Artificial intelligence is to research design principles and implementation methods of various intelligent machines, so that the machines have functions of perception, reasoning, and decision-making. Research in the field of artificial intelligence includes robotics, natural language processing, computer vision, decision-making and reasoning, man-machine interaction, recommendation and search, AI basic theories, and the like.

Autonomous driving is a mainstream application in the field of artificial intelligence. The autonomous driving technology depends on computer vision, a radar, a monitoring apparatus, a global positioning system, and the like to collaborate with each other, to implement autonomous driving of a motor vehicle without human intervention. Autonomous driving vehicles use various computing systems to help transport passengers from one location to another. Some autonomous driving vehicles may require some initial inputs or continuous inputs from an operator (for example, a pilot, a driver, or a passenger). Autonomous driving vehicles allow an operator to switch from a manual operation mode to an autonomous driving mode or operate in a mode in between. The autonomous driving technology does not require a person to drive a motor vehicle, so that theoretically, a driving mistake of the person can be effectively avoided, occurrence of traffic accidents can be reduced, and transport efficiency of roads can be improved. Therefore, the autonomous driving technology attracts increasing attention. As a quantity of automobiles is increasing rapidly, parking spots in a city become increasingly insufficient and narrow. Due to narrow space of a parking spot, it is usually difficult to control an automobile to be parked fast and accurately. To reduce intervention of a driver and reduce parking load and difficulty, an automatic parking system is usually configured in an automobile. The automatic parking system can detect a size and a location of a parking spot by using a sensor, plan a feasible parking path, and finally automatically control a steering system, a braking system, and a power system to complete parking in compliance with the planned path, to help the driver to park accurately and safely.

Path planning is a key technology in the automatic parking system. At present, common path planning methods are a geometry-based method and a search-based method. However, the existing path planning methods usually have problems of a large computation amount and a low success rate. As a result, a feasible track for automatic parking possibly cannot be obtained.

Therefore, how to improve a success rate of a vehicle path planning method becomes an issue to be urgently resolved.

**SUMMARY**

This application provides a vehicle path planning method and a vehicle path planning apparatus, to perform segmented planning on a path between an initial parking pose and a target parking pose of a vehicle based on an intermediate pose of the vehicle, thereby improving a success rate of vehicle path planning.

According to a first aspect, a vehicle path planning method is provided, including: obtaining information about an initial parking pose, a target parking pose, and an intermediate pose of a vehicle, where when the vehicle is in the intermediate pose, at least a part of the vehicle is located outside a parking spot in which the target parking pose is located; and performing segmented planning on a path between the initial parking pose and the target parking pose based on the intermediate pose to obtain a target traveling path, where the target traveling path is used by the vehicle to travel from the initial parking pose to the target parking pose.

When the vehicle is in the intermediate pose, at least a part of the vehicle is located outside the parking spot in which the target parking pose is located, and this may mean: When the vehicle is in the intermediate pose, the vehicle is located entirely outside the parking spot, or a part of the vehicle is located outside the parking spot.

It should be noted that a vehicle pose may refer to coordinates and a heading angle of the vehicle. For example, the initial parking pose of the vehicle may refer to a horizontal coordinate and a vertical coordinate of a rear axle center and a heading angle of the vehicle when the vehicle is initially parked. The target parking pose of the vehicle may refer to a horizontal coordinate and a vertical coordinate of the rear axle center and a heading angle of the vehicle when the vehicle successfully travels to the parking spot.

In this embodiment of this application, segmented planning may be performed on the global path between the initial parking pose and the target parking pose of the vehicle based on the intermediate pose, to obtain segmented traveling tracks. In this way, when the parking spot has narrow space and irregular parking boundaries, the vehicle is capable of traveling, by fully utilizing the space, to the parking spot in which the target parking pose is located, thereby improving a success rate of vehicle path planning.

With reference to the first aspect, in some implementations of the first aspect, the intermediate pose is a vehicle pose in which the vehicle is capable of traveling out of the parking spot at a maximum steering wheel angle.

For example, the intermediate pose may be a vehicle pose in which the vehicle is capable of leaving the parking spot. In other words, by using this pose, the vehicle is capable of directly traveling to the target parking pose in the parking spot.

It should be understood that directly traveling to the target parking pose may mean: The vehicle travels, without stopping, to the target parking pose by adjusting a steering wheel angle of the vehicle.

In this embodiment of this application, the intermediate pose may be a vehicle pose that enables the vehicle to directly travel to the target parking pose, to improve a success rate of vehicle path planning when a cost function of the vehicle is small.

With reference to the first aspect, in some implementations of the first aspect, the performing segmented planning on a path between the initial parking pose and the target parking pose based on the intermediate pose to obtain a target traveling path includes:

when the segmented planning performed based on the intermediate pose fails, performing path planning based on a vehicle pose that is preconfigured based on length information and width information of the parking spot, to obtain the target traveling path.

For example, the failure of segmented path planning may mean that a distance of the target traveling path obtained by performing segmented planning by using, as the intermediate pose, the vehicle pose in which the vehicle is capable of traveling out of the parking spot at the maximum steering wheel angle is excessively long, or there are a large quantity of direction switching points in a switching direction, causing poor experience of a driver. In this case, path planning may be performed based on the preconfigured vehicle pose to obtain the target traveling path.

In this embodiment of this application, when segmented path planning performed by using, as the intermediate pose, the vehicle pose in which the vehicle is capable of traveling out of the parking spot at the maximum steering wheel angle fails, path planning may be performed by using the preconfigured vehicle pose as the intermediate pose, to ensure that the vehicle is capable of successfully traveling to the parking spot, thereby improving a success rate of automatic parking of the vehicle.

With reference to the first aspect, in some implementations of the first aspect, the intermediate pose is a vehicle pose that is preconfigured based on length information and width information of the parking spot.

In this embodiment of this application, to ensure that the vehicle is capable of successfully traveling to the parking spot, the preconfigured vehicle pose, namely, a heuristic pose, may be directly selected as the intermediate pose. To be specific, after parking starts, the vehicle may first travel to the heuristic pose, and then the vehicle may directly travel from the heuristic pose to the parking spot.

With reference to the first aspect, in some implementations of the first aspect, when the vehicle collides with an obstacle in the preconfigured vehicle pose, a collision pose of the vehicle is configured as an updated preconfigured vehicle pose.

For example, after a surrounding environment of the parking spot or the vehicle changes, for example, when an obstacle appears near the preconfigured vehicle pose, the vehicle pose in which the vehicle collides with the obstacle or a vehicle pose in the switching direction may be configured as the updated preconfigured vehicle pose.

With reference to the first aspect, in some implementations of the first aspect, the performing segmented planning on a path between the initial parking pose and the target parking pose based on the intermediate pose to obtain a target path includes:

performing path planning by using the initial parking pose as a planning start point and using the intermediate pose as a planning end point, to obtain a first section of traveling path; and performing path planning by using the intermediate pose as a planning start point and using the target parking pose as a planning end point, to obtain a second section of traveling path, where the first section of traveling path and the second section of traveling path form the target traveling path.

In this embodiment of this application, the target traveling path may be a traveling track of the vehicle obtained by splicing the first section of traveling path and the second section of traveling path.

With reference to the first aspect, in some implementations of the first aspect, input parameters of the vehicle on the first section of traveling path and/or the second section of traveling path satisfy a preset threshold, where the input parameters include a speed and a steering wheel angle of the vehicle.

In this embodiment of this application, to avoid poor user experience caused by a plurality of times of parking during automatic parking of the vehicle and to ensure that a curvature of the planned traveling path is continuous, when the first section of traveling path and the second section of traveling path are planned, the input parameters of the vehicle may be constrained, so that the input parameters of the vehicle satisfy a dynamics characteristic of the vehicle, thereby improving user experience.

According to a second aspect, a vehicle path planning method is provided. The method is applied to a vehicle having a display, and includes: detecting a first operation used by a user to indicate to enable automatic parking; displaying location information of a candidate parking spot on the display in response to the first operation; detecting a second operation of the user for indicating a target parking spot in the candidate parking spot; and displaying a target traveling path on the display in response to the second operation, where the target traveling path is used by the vehicle to travel from an initial parking pose indicating automatic parking enabling to a target parking pose in the target parking spot, the target traveling path is obtained by performing segmented planning on a path between the initial parking pose and the target parking pose based on an intermediate pose of the vehicle, and when the vehicle is in the intermediate pose, at least a part of the vehicle is located outside the target parking spot.

When the vehicle is in the intermediate pose, at least a part of the vehicle is located outside the parking spot in which the target parking pose is located, and this may mean: When the vehicle is in the intermediate pose, the vehicle is located entirely outside the parking spot, or a part of the vehicle is located outside the parking spot.

It should be noted that a vehicle pose may refer to coordinates and a heading angle of the vehicle. For example, information about the initial parking pose of the vehicle may refer to a horizontal coordinate and a vertical coordinate of a rear axle center and a heading angle of the vehicle when the vehicle is initially parked. The target parking pose of the vehicle may refer to a horizontal coordinate and a vertical coordinate of the rear axle center and a heading angle of the vehicle when the vehicle successfully travels to the parking spot.

In this embodiment of this application, segmented planning may be performed on the global path between the initial parking pose and the target parking pose of the vehicle based on the intermediate pose, to obtain segmented traveling tracks. In this way, when the parking spot has narrow space and irregular parking boundaries, the vehicle is capable of traveling, by fully utilizing the space, to the parking spot in which the target parking pose is located, thereby improving a success rate of vehicle path planning.

With reference to the second aspect, in some implementations of the second aspect, the intermediate pose is a vehicle pose in which the vehicle is capable of traveling out of the target parking spot at a maximum steering wheel angle.

For example, the intermediate pose may be a vehicle pose in which the vehicle is capable of leaving the parking spot. In other words, by using this pose, the vehicle is capable of directly traveling to the target parking pose in the parking spot.

It should be understood that directly traveling to the target parking pose may mean: The vehicle travels, without stopping, to the target parking pose by adjusting a steering wheel angle of the vehicle.

In this embodiment of this application, the intermediate pose may be a vehicle pose that enables the vehicle to directly travel to the target parking pose, to improve a success rate of vehicle path planning when a cost function of the vehicle is small.

With reference to the second aspect, in some implementations of the second aspect, the target traveling path is obtained by performing planning based on a preconfigured vehicle pose when the segmented planning performed based on the intermediate pose fails, and the preconfigured vehicle pose is obtained based on length information and width information of the target parking spot.

For example, the failure of segmented path planning may mean that a distance of the target traveling path obtained by performing segmented planning by using, as the intermediate pose, the vehicle pose in which the vehicle is capable of traveling out of the parking spot at the maximum steering wheel angle is excessively long, or there are a large quantity of direction switching points in a switching direction, causing poor experience of a driver. In this case, path planning may be performed based on the preconfigured vehicle pose to obtain the target traveling path.

In this embodiment of this application, when segmented path planning performed by using, as the intermediate pose, the vehicle pose in which the vehicle is capable of traveling out of the parking spot at the maximum steering wheel angle fails, path planning may be performed by using the preconfigured vehicle pose as the intermediate pose, to ensure that the vehicle is capable of successfully traveling to the parking spot, thereby improving a success rate of automatic parking of the vehicle.

With reference to the second aspect, in some implementations of the second aspect, the intermediate pose is a vehicle pose that is preconfigured based on length information and width information of the parking spot.

In this embodiment of this application, to ensure that the vehicle is capable of successfully traveling to the parking spot, the preconfigured vehicle pose, namely, a heuristic pose, may be directly selected as the intermediate pose. To be specific, after parking starts, the vehicle may first travel to the heuristic pose, and then the vehicle may directly travel from the heuristic pose to the parking spot.

With reference to the second aspect, in some implementations of the second aspect, when the vehicle collides with an obstacle in the preconfigured vehicle pose, a collision pose of the vehicle is configured as an updated preconfigured vehicle pose.

For example, after a surrounding environment of the parking spot or the vehicle changes, for example, when an obstacle appears near the preconfigured vehicle pose, the vehicle pose in which the vehicle collides with the obstacle or a vehicle pose in the switching direction may be configured as the updated preconfigured vehicle pose.

With reference to the second aspect, in some implementations of the second aspect, the target traveling path includes a first section of traveling path and a second section of traveling path, where the first section of traveling path is obtained by performing path planning by using the initial parking pose as a planning start point and using the intermediate pose as a planning end point, and the second section of traveling path is obtained by performing path planning by using the intermediate pose as a planning start point and using the target parking pose as a planning end point.

In this embodiment of this application, the target traveling path may be a traveling track of the vehicle obtained by splicing the first section of traveling path and the second section of traveling path.

With reference to the second aspect, in some implementations of the second aspect, input parameters of the vehicle on the first section of traveling path and/or the second section of traveling path satisfy a preset threshold, where the input parameters include a speed and a steering wheel angle of the vehicle.

In this embodiment of this application, to avoid poor user experience caused by a plurality of times of parking during automatic parking of the vehicle and to ensure that a curvature of the planned traveling path is continuous, when the first section of traveling path and the second section of traveling path are planned, the input parameters of the vehicle may be constrained, so that the input parameters of the vehicle satisfy a dynamics characteristic of the vehicle, thereby improving user experience.

According to a third aspect, a vehicle path planning apparatus is provided, including: an obtaining unit, configured to obtain information about an initial parking pose, a target parking pose, and an intermediate pose of a vehicle, where when the vehicle is in the intermediate pose, at least a part of the vehicle is located outside a parking spot in which the target parking pose is located; and a processing unit, configured to perform segmented planning on a path between the initial parking pose and the target parking pose based on the intermediate pose to obtain a target traveling path, where the target traveling path is used by the vehicle to travel from the initial parking pose to the target parking pose.

In a possible implementation, functional units/modules included in the training apparatus are further configured to perform the path planning method in any one of the first aspect or the implementations of the first aspect.

It should be understood that an extension, a limitation, an explanation, and a description of related content in the first aspect are also applicable to same content in the third aspect.

According to a fourth aspect, a vehicle path planning apparatus is provided. The apparatus is applied to a vehicle having a display, and includes: a detection unit, configured to detect a first operation used by a user to indicate to enable automatic parking; and a processing unit, configured to display location information of a candidate parking spot on the display in response to the first operation; where the detection unit is further configured to detect a second operation of the user for indicating a target parking spot in the candidate parking spot; and the processing unit is further configured to display a target traveling path on the display in response to the second operation, where the target traveling path is used by the vehicle to travel from an initial parking pose indicating automatic parking enabling to a target parking pose in the target parking spot, the target traveling path is obtained by performing segmented planning on a path between the initial parking pose and the target parking pose based on an intermediate pose of the vehicle, and when the vehicle is in the intermediate pose, at least a part of the vehicle is located outside the target parking spot.

In a possible implementation, functional units/modules included in the training apparatus are further configured to perform the path planning method in any one of the second aspect or the implementations of the second aspect.

It should be understood that an extension, a limitation, an explanation, and a description of related content in the second aspect are also applicable to same content in the fourth aspect.

According to a fifth aspect, a vehicle path planning apparatus is provided, including: a memory, configured to store a program; and a processor, configured to execute the program stored in the memory. When executing the program stored in the memory, the processor is configured to perform the following process: obtaining information about an initial parking pose, a target parking pose, and an intermediate pose of a vehicle, where when the vehicle is in the intermediate pose, at least a part of the vehicle is located outside a parking spot in which the target parking pose is located; and performing segmented planning on a path between the initial parking pose and the target parking pose based on the intermediate pose to obtain a target traveling path, where the target traveling path is used by the vehicle to travel from the initial parking pose to the target parking pose.

With reference to the fifth aspect, in some implementations of the fifth aspect, the intermediate pose is a vehicle pose in which the vehicle is capable of traveling out of the parking spot at a maximum steering wheel angle.

With reference to the fifth aspect, in some implementations of the fifth aspect, the processor is specifically configured to:

when the segmented planning performed based on the intermediate pose fails, perform path planning based on a vehicle pose that is preconfigured based on length information and width information of the parking spot, to obtain the target traveling path.

With reference to the fifth aspect, in some implementations of the fifth aspect, the intermediate pose is a vehicle pose that is preconfigured based on length information and width information of the parking spot.

With reference to the fifth aspect, in some implementations of the fifth aspect, when the vehicle collides with an obstacle in the preconfigured vehicle pose, a collision pose of the vehicle is configured as an updated preconfigured vehicle pose.

With reference to the fifth aspect, in some implementations of the fifth aspect, the processor is specifically configured to:

perform path planning by using the initial parking pose as a planning start point and using the intermediate pose as a planning end point, to obtain a first section of traveling path; and perform path planning by using the intermediate pose as a planning start point and using the target parking pose as a planning end point, to obtain a second section of traveling path, where the first section of traveling path and the second section of traveling path form the target traveling path.

With reference to the fifth aspect, in some implementations of the fifth aspect, input parameters of the vehicle on the first section of traveling path and/or the second section of traveling path satisfy a preset threshold, where the input parameters include a speed and a steering wheel angle of the vehicle.

According to a sixth aspect, a vehicle path planning apparatus is provided. The apparatus is applied to a vehicle having a display, and includes: a memory, configured to store a program; and a processor, configured to execute the program stored in the memory. When executing the program stored in the memory, the processor is configured to perform the following process: detecting a first operation used by a user to indicate to enable automatic parking; displaying location information of a candidate parking spot on the display in response to the first operation; detecting a second operation of the user for indicating a target parking spot in the candidate parking spot; and displaying a target traveling path on the display in response to the second operation, where the target traveling path is used by the vehicle to travel from an initial parking pose indicating automatic parking enabling to a target parking pose in the target parking spot, the target traveling path is obtained by performing segmented planning on a path between the initial parking pose and the target parking pose based on an intermediate pose of the vehicle, and when the vehicle is in the intermediate pose, at least a part of the vehicle is located outside the target parking spot.

With reference to the sixth aspect, in some implementations of the sixth aspect, the intermediate pose is a vehicle pose in which the vehicle is capable of traveling out of the target parking spot at a maximum steering wheel angle.

With reference to the sixth aspect, in some implementations of the sixth aspect, the target traveling path is obtained by performing planning based on a preconfigured vehicle pose when the segmented planning performed based on the intermediate pose fails, and the preconfigured vehicle pose is obtained based on length information and width information of the target parking spot.

With reference to the sixth aspect, in some implementations of the sixth aspect, the intermediate pose is a vehicle pose that is preconfigured based on length information and width information of the parking spot.

With reference to the sixth aspect, in some implementations of the sixth aspect, when the vehicle collides with an obstacle in the preconfigured vehicle pose, a collision pose of the vehicle is configured as an updated preconfigured vehicle pose.

With reference to the sixth aspect, in some implementations of the sixth aspect, the target traveling path includes a first section of traveling path and a second section of traveling path, where the first section of traveling path is obtained by performing path planning by using the initial parking pose as a planning start point and using the intermediate pose as a planning end point, and the second section of traveling path is obtained by performing path planning by using the intermediate pose as a planning start point and using the target parking pose as a planning end point.

With reference to the sixth aspect, in some implementations of the sixth aspect, input parameters of the vehicle on the first section of traveling path and/or the second section of traveling path satisfy a preset threshold, where the input parameters include a speed and a steering wheel angle of the vehicle.

Optionally, the path planning apparatus may be a vehicle-mounted device/server, or may be a chip in a vehicle-mounted device/server.

Optionally, the memory may be located in the processor. For example, the memory may be a cache (cache) in the processor. The memory may alternatively be located outside the processor and independent of the processor. For example, the memory may be an internal memory (memory) of the training apparatus.

According to a seventh aspect, a computer program product is provided. The computer program product includes computer program code. When the computer program code is run on a computer, the computer is enabled to perform the methods according to the foregoing aspects.

It should be noted that some or all of the computer program code may be stored in a first storage medium. The first storage medium may be packaged with a processor, or may be packaged separately from a processor. This is not specifically limited in this embodiment of this application.

According to an eighth aspect, a computer-readable medium is provided. The computer-readable medium stores program code. When the computer program code is run on a computer, the computer is enabled to perform the methods according to the foregoing aspects.

**BRIEF DESCRIPTION OF DRAWINGS**

FIG. 1 is a schematic diagram of a structure of a vehicle according to an embodiment of this application;
FIG. 2 is a schematic diagram of a structure of a computer system according to an embodiment of this application;
FIG. 3 is a schematic diagram of application of a cloud instruction-based autonomous driving vehicle according to an embodiment of this application;
FIG. 4 is a schematic diagram of an automatic parking system according to an embodiment of this application;
FIG. 5 is a schematic diagram of different types of parking spots according to an embodiment of this application;
FIG. 6 is a schematic flowchart of a vehicle path planning method according to an embodiment of this application;
FIG. 7 is a schematic flowchart of a vehicle path planning method according to an embodiment of this application;
FIG. 8 is a schematic flowchart of a vehicle path planning method according to an embodiment of this application;
FIG. 9 is a schematic diagram of hierarchical path planning according to an embodiment of this application;
FIG. 10A and FIG. 10B are a schematic flowchart of partial path planning according to an embodiment of this application;
FIG. 11 is a schematic flowchart of a heuristic path planning method according to an embodiment of this application;
FIG. 12 is a schematic diagram of a heuristic pose according to an embodiment of this application;
FIG. 13 is a schematic diagram of generating an updated heuristic pose according to an embodiment of this application;
FIG. 14 is a schematic diagram of a structure of a vehicle path planning apparatus according to an embodiment of this application;
FIG. 15 is a schematic diagram of a structure of a vehicle path planning apparatus according to an embodiment of this application; and
FIG. 16 is a schematic diagram of a structure of a vehicle path planning apparatus according to an embodiment of this application.

**DESCRIPTION OF EMBODIMENTS**

The following describes the technical solutions in embodiments of this application with reference to the accompanying drawings in embodiments of this application. It is clear that the described embodiments are merely some but not all embodiments of this application. All other embodiments obtained by a person of ordinary skill in the art based on embodiments of this application without creative efforts shall fall within the protection scope of this application.

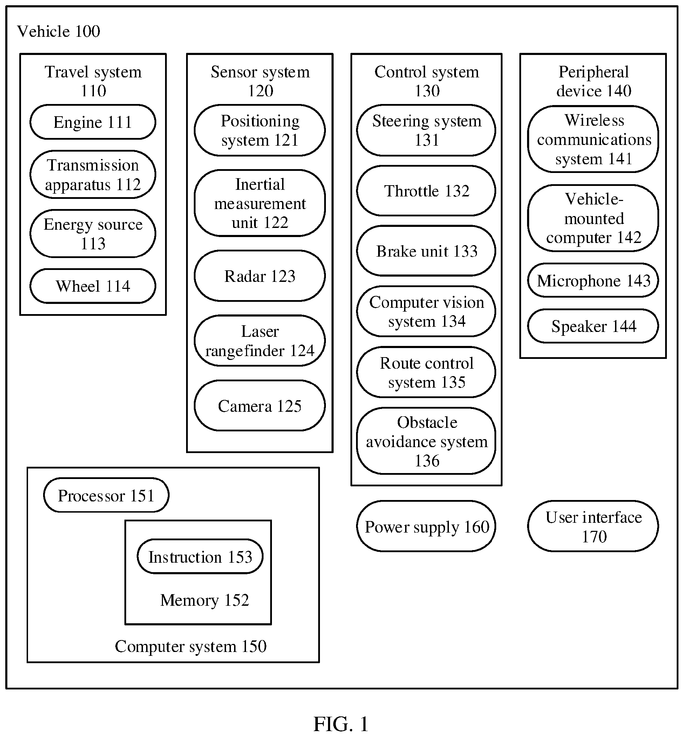

FIG. 1 is a functional block diagram of a vehicle 100 according to an embodiment of this application.

The vehicle 100 may be a manually driven vehicle, or the vehicle 100 may be configured in a fully or partially autonomous driving mode.

In an example, the vehicle 100 can control itself when in an autonomous driving mode, and through manual operations, can determine current states of the vehicle and a surrounding environment of the vehicle, determine possible behavior of at least one another vehicle in the surrounding environment, determine a confidence level corresponding to a possibility that the another vehicle performs the possible behavior, and control the vehicle 100 based on the determined information. When the vehicle 100 is in the autonomous driving mode, the vehicle 100 may be set to operate without interaction with a person.

The vehicle 100 may include various subsystems, such as a travel system 110, a sensing system 120, a control system 130, one or more peripheral devices 140, a power supply 160, a computer system 150, and a user interface 170.

Optionally, the vehicle 100 may include more or less subsystems, and each subsystem may include a plurality of elements. In addition, all the subsystems and elements of the vehicle 100 may be interconnected in a wired or wireless manner.

For example, the travel system 110 may include a component for providing power motion to the vehicle 100. In one embodiment, the travel system 110 may include an engine 111, a transmission device 112, an energy source 113, and a wheel/tire 114. The engine 111 may be an internal combustion engine, a motor, an air compression engine, or a combination of other types of engines, for example, a hybrid engine formed by a gasoline engine and a motor, or a hybrid engine formed by an internal combustion engine and an air compression engine. The engine 111 may convert the energy source 113 into mechanical energy.

For example, the energy source 113 includes gasoline, diesel, another oil-based fuel, propane, another compressed-gas-based fuel, ethanol, a solar panel, a battery, and another power source. The energy source 113 may also provide energy to another system of the vehicle 100.

For example, the transmission device 112 may include a gearbox, a differential, and a drive shaft, where the transmission device 112 may transmit the mechanical power from the engine 111 to the wheel 114.

In an embodiment, the transmission device 112 may further include another device, for example, a clutch. The drive shaft may include one or more shafts that may be coupled to one or more wheels 114.

For example, the sensing system 120 may include several sensors that sense information about the surrounding environment of the vehicle 100.

For example, the sensing system 120 may include a positioning system 121 (for example, a GPS system, a BeiDou system, or another positioning system), an inertial measurement unit (inertial measurement unit, IMU) 122, a radar 123, a laser rangefinder 124, and a camera 125. The sensing system 120 may further include sensors (for example, an in-vehicle air quality monitor, a fuel gauge, and an oil temperature gauge) of an internal system of the monitored vehicle 100. Sensor data from one or more of these sensors can be used to detect an object and corresponding characteristics (a location, a shape, a direction, a speed, and the like) of the object. Such detection and identification are key functions of a safe operation of the autonomous vehicle 100.

The positioning system 121 may be configured to estimate a geographical location of the vehicle 100. The IMU 122 may be configured to sense changes in a location and an orientation of the vehicle 100 based on inertial acceleration. In an embodiment, the IMU 122 may be a combination of an accelerometer and a gyroscope.

For example, the radar 123 may use radio signals to sense an object within the surrounding environment of the vehicle 100. In some embodiments, in addition to sensing the object, the radar 123 may be further configured to sense a speed and/or an advancing direction of the object.

For example, the laser rangefinder 124 may use laser light to sense an object in an environment in which the vehicle 100 is located. In some embodiments, the laser rangefinder 124 may include one or more laser sources, a laser scanner, one or more detectors, and another system component.

For example, the camera 125 may be configured to capture a plurality of images of the surrounding environment of the vehicle 100. For example, the camera 125 may be a static camera or a video camera.

As shown in FIG. 1, the control system 130 controls operations of the vehicle 100 and components of the vehicle. The control system 130 may include various elements, such as a steering system 131, a throttle 132, a brake unit 133, a computer vision system 134, a route control system 135, and an obstacle avoidance system 136.

For example, the steering system 131 may be operated to adjust an advancing direction of the vehicle 100. For example, in an embodiment, the steering system may be a steering wheel system. The throttle 132 may be configured to control an operation speed of the engine 111 and thus control a speed of the vehicle 100.

For example, the brake unit 133 may be configured to control the vehicle 100 to decelerate, and the brake unit 133 may use friction force to retard the wheel 114. In another embodiment, the brake unit 133 may convert kinetic energy of the wheel 114 into a current. The brake unit 133 may also slow down a rotational speed of the wheel 114 to control the speed of the vehicle 100.

As shown in FIG. 1, the computer vision system 134 may be operated to process and analyze images captured by the camera 125 in order to identify objects and/or characteristics in the surrounding environment of the vehicle 100. The objects and/or characteristics may include traffic signals, road boundaries, and obstacles. The computer vision system 134 may use an object recognition algorithm, a structure from motion (Structure from Motion, SFM) algorithm, video tracking, and other computer vision technologies. In some embodiments, the computer vision system 134 may be configured to: draw a map for an environment, track an object, estimate a speed of the object, and the like.

For example, the route control system 135 may be configured to determine a driving route of the vehicle 100. In some embodiments, the route control system 135 may determine a driving route for the vehicle 100 with reference to data from the sensors, the GPS, and one or more predetermined maps.

As shown in FIG. 1, the obstacle avoidance system 136 may be used to identify, evaluate, and avoid or otherwise to cross potential obstacles in an environment of the vehicle 100.

In an instance, the control system 130 may additionally or alternatively include components other than those shown and described. Alternatively, the control system 130 may delete some of the components shown above.

As shown in FIG. 1, the vehicle 100 may interact with an external sensor, another vehicle, another computer system, or a user by using the peripheral device 140. The peripheral device 140 may include a wireless communications system 141, a vehicle-mounted computer 142, a microphone 143, and/or a speaker 144.

In some embodiments, the peripheral device 140 may provide a means for the vehicle 100 to interact with the user interface 170. For example, the vehicle-mounted computer 142 may provide information for the user of the vehicle 100. The user interface 116 may also be configured to operate the vehicle-mounted computer 142 to receive a user input, and the vehicle-mounted computer 142 can be operated through a touchscreen. In another case, the peripheral device 140 may provide a means for the vehicle 100 to communicate with another device in the vehicle. For example, the microphone 143 may receive audio (for example, a voice command or another audio input) from the user of the vehicle 100. Likewise, the speaker 144 may output audio to the user of the vehicle 100.

As illustrated in FIG. 1, the wireless communications system 141 may communicate wirelessly with one or more devices directly or through a communications network. For example, the wireless communications system 141 may use 3G cellular communications such as code division multiple access (code division multiple access, CDMA), EVD0, a global system for mobile communications (global system for mobile communications, or GSM)/a general packet radio service (general packet radio service, GPRS), 4G cellular communications such as long term evolution (long term evolution, LTE), or 5G cellular communications. The wireless communications system 141 may communicate with a wireless local area network (wireless local area network, WLAN) by using wireless Internet access (Wi-Fi).

In some embodiments, the wireless communications system 141 may directly communicate with a device by using an infrared link, Bluetooth, or ZigBee protocol (ZigBee). Other wireless protocols, such as various vehicle communications systems, for example, the wireless communications system 141, may include one or more dedicated short range communications (dedicated short range communications, DSRC) devices which may include public and/or private data communications between vehicles and/or roadside stations.

As shown in FIG. 1, the power supply 160 may provide power to various components of the vehicle 100. In an embodiment, the power supply 160 may be a rechargeable lithium-ion or lead-acid battery. One or more battery packs of such batteries may be configured as the power supply to supply power to the components of the vehicle 100. In some embodiments, the power supply 160 and the energy source 113 may be implemented together, as in some battery electric vehicles.

For example, some or all of the functions of the vehicle 100 may be controlled by the computer system 150, where the computer system 150 may include at least one processor 151, and the processor 151 executes an instruction 153 stored in, for example, a non-transient computer-readable medium in a memory 152. The computer system 150 may alternatively be a plurality of computing devices that control individual components or subsystems of the vehicle 100 in a distributed manner.

For example, the processor 151 may be any conventional processor such as a commercially available CPU.

Optionally, the processor may be a dedicated device such as an ASIC or another hardware-based processor. Although FIG. 1 functionally illustrates the processor, the memory, and other elements of a computer in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Thus, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In other aspects, some of the processes described herein are performed on the processor disposed inside the vehicle, while others are performed by a remote processor. The processes include necessary steps for performing a single operation.

In some embodiments, the memory 152 may include the instruction 153 (for example, program logic), and the instruction 153 may be executed by the processor 151 to perform various functions of the vehicle 100, including those functions described above. The memory 152 may also include additional instructions, including instructions to send data to, receive data from, interact with, and/or control one or more of the travel system 110, the sensing system 120, the control system 130, and the peripheral device 140.

For example, in addition to the instruction 153, the memory 152 may also store data, such as road maps, route information, locations, directions, and speeds of the vehicle and other such vehicle data, as well as other information. Such information may be used by the vehicle 100 and the computer system 150 during operation of the vehicle 100 in autonomous, semi-autonomous, and/or manual modes.

As shown in FIG. 1, the user interface 170 may be configured to provide information to or receive information from the user of the vehicle 100. Optionally, the user interface 170 may be included in one or more input/output devices in a set of the peripheral device 140, for example, the wireless communications system 141, the vehicle-mounted computer 142, the microphone 143, and the speaker 144.

In this embodiment of this application, the computer system 150 may control the functions of the vehicle 100 based on inputs received from various subsystems (for example, the travel system 110, the sensing system 120, and the control system 130) and the user interface 170. For example, the computer system 150 may use an input from the control system 130 to control the brake unit 133 to avoid an obstacle that is detected by the sensing system 120 and the obstacle avoidance system 136. In some embodiments, the computer system 150 is operated to provide control over many aspects of the vehicle 100 and the subsystems of vehicle.

Optionally, one or more of the foregoing components may be installed separately from or associated with the vehicle 100. For example, the memory 152 may exist partially or completely separate from the vehicle 100. The foregoing components may be communicatively coupled together in a wired and/or wireless manner.

Optionally, the foregoing components are merely examples. In actual application, components in the foregoing modules may be added or deleted according to an actual requirement. FIG. 1 should not be understood as a limitation on embodiments of this application.

Optionally, the vehicle 100 may be an autonomous driving vehicle traveling on a road and may identify an object in the surrounding environment of the vehicle, to determine to adjust a current speed. The object may be another vehicle, a traffic control device, or another type of object. In some examples, each recognized object may be considered independently and may be used to determine the speed to be adjusted by the autonomous driving vehicle, based on characteristics of each object, such as a current speed of the object, acceleration of the object, and a spacing between the object and the vehicle.

Optionally, the vehicle 100 or a computing device (for example, the computer system 150, the computer vision system 134, or the memory 152 shown in FIG. 1) associated with the vehicle 100 may be configured to predict behavior of the identified object based on the characteristics of the identified object and a state (for example, traffic, rain, or ice on a road) of the surrounding environment.

Optionally, the recognized objects depend on behavior of each other. Therefore, all the recognized objects may be considered together to predict behavior of a single recognized object. The vehicle 100 can adjust the velocity of the vehicle based on the predicted behavior of the recognized object. In other words, the autonomous driving vehicle can determine, based on the predicted behavior of the object, that the vehicle needs to be adjusted (for example, acceleration, deceleration, or stop) to a stable state. In this process, another factor may also be considered to determine the speed of the vehicle 100, for example, a horizontal location of the vehicle 100 on a road on which the vehicle travels, a curvature of the road, and proximity between a static object and a dynamic object.

In addition to providing an instruction for adjusting the velocity of the autonomous driving vehicle, the computing device may provide an instruction for modifying a steering angle of the vehicle 100, so that the autonomous driving vehicle follows a given trajectory and/or maintains safe transverse and longitudinal distances from an object (for example, a car in an adjacent lane on the road) next to the autonomous driving vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

In a possible implementation, the vehicle 100 shown in FIG. 1 may be an autonomous driving vehicle. The following describes an autonomous driving system in detail.

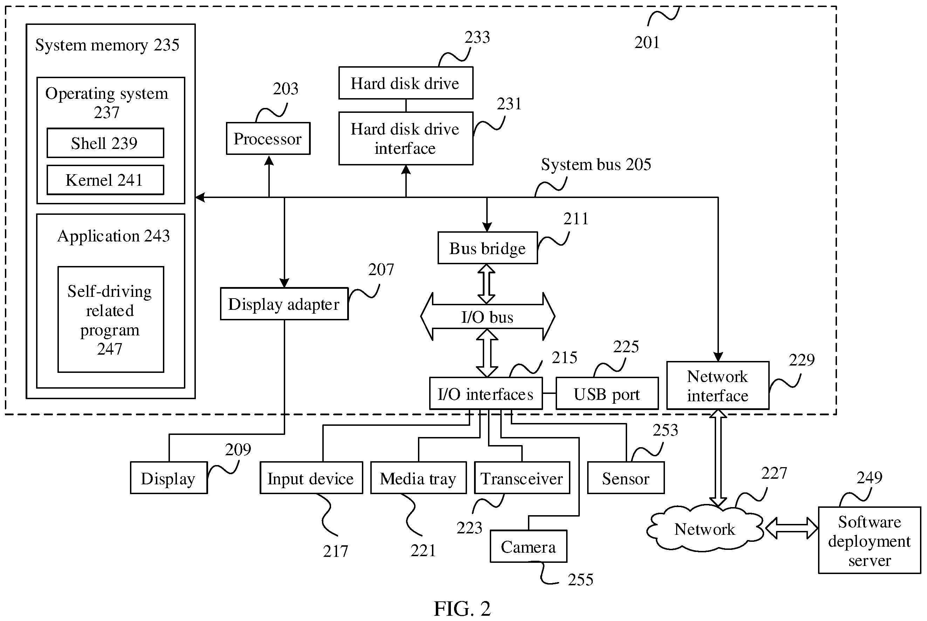

FIG. 2 is a schematic diagram of an autonomous driving system according to an embodiment of this application.

The autonomous driving system shown in FIG. 2 includes a computer system 201. The computer system 201 includes a processor 203, and the processor 203 is coupled to a system bus 205. The processor 203 may be one or more processors, and each processor may include one or more processor cores. A display adapter (video adapter) 207 may drive a display 209, and the display 209 is coupled to the system bus 205. The system bus 205 may be coupled to an input/output (I/O) bus 213 by using a bus bridge 211, and an I/O interface 215 is coupled to the I/O bus. The I/O interface 215 communicates with a plurality of I/O devices, such as an input device 217 (for example, a keyboard, a mouse, or a touchscreen) and a media tray (media tray) 221 (for example, a CD-ROM or a multimedia interface). A transceiver 223 may transmit and/or receive radio communications signals, and a camera lens 255 may capture static and dynamic digital video images. An interface connected to the I/O interface 215 may be a USB port 225.

The processor 203 may be any conventional processor, for example, a reduced instruction set computing (reduced instruction set computer, RISC) processor, a complex instruction set computing (complex instruction set computer, CISC) processor, or a combination thereof.

Optionally, the processor 203 may be a dedicated apparatus, for example, an application-specific integrated circuit (application specific integrated circuit, ASIC). The processor 203 may be a neural network processor or a combination of a neural network processor and the foregoing conventional processor.

Optionally, in various embodiments described herein, the computer system 201 may be located away from the self-driving vehicle and may communicate wirelessly with the self-driving vehicle. In another aspect, some of processes described herein are performed on a processor disposed in the self-driving vehicle, and others are performed by a remote processor, including taking an action required to perform a single manipulation.

The computer system 201 may communicate with a software deployment server 249 through a network interface 229. The network interface 229 may be a hardware network interface, for example, a network interface card. A network 227 may be an external network, for example, the Internet, or may be an internal network, for example, an Ethernet or a virtual private network (virtual private network, VPN). Alternatively, the network 227 may be a wireless network, for example, a Wi-Fi network or a cellular network.

As shown in FIG. 2, a hard disk drive interface is coupled to the system bus 205, a hardware driver interface 231 may be connected to a hard disk drive 233, and a system memory 235 is coupled to the system bus 205. Data running in the system memory 235 may include an operating system 237 and an application 243. The operating system 237 may include a shell (shell) 239 and a kernel (kernel) 241. The shell 239 is an interface between a user and the kernel (kernel) of the operating system. The shell may be the outermost layer of the operating system. The shell can manage interactions between the user and the operating system, such as waiting for a user input, interpreting the user input to the operating system, and processing a variety of output results of operating system. The kernel 241 may include components in the operating system that are configured to manage a memory, a file, a peripheral device, and a system resource. The kernel directly interacts with hardware. The kernel of the operating system usually runs processes, provides communication between the processes, and provides CPU time slice management, interruption, memory management, I/O management, and the like. The application 243 includes programs for controlling autonomous driving of the vehicle, for example, a program that manages interaction between the autonomous driving vehicle and a road obstacle, a program that controls a route or a speed of the autonomous driving vehicle, a program that controls interaction between the autonomous driving vehicle and another autonomous driving vehicle on a road. The application 243 also exists on a system of the software deployment server 249. In an embodiment, the computer system 201 may download the application from the software deployment server 249 when an autonomous driving related program 247 needs to be executed.

For example, the application 243 may alternatively be a program that controls the autonomous driving vehicle to perform automatic parking.

For example, a sensor 253 may be associated with the computer system 201, and the sensor 253 may be configured to detect a surrounding environment of the computer 201.

For example, the sensor 253 may detect an animal, a car, an obstacle, a pedestrian crosswalk, and the like. Further, the sensor may detect an environment around the foregoing object such as the animal, the car, the obstacle, and the pedestrian crosswalk, for example, an environment around the animal, such as another animal appearing around the animal, a weather condition, and brightness of the surrounding environment.

Optionally, if the computer 201 is located on the autonomous driving vehicle, the sensor may be a camera lens, an infrared sensor, a chemical detector, a microphone, or the like.

For example, in an automatic parking scenario, the sensor 253 may be configured to detect sizes or locations of a parking spot around the vehicle and a surrounding obstacle, so that the vehicle can sense a distance between the parking spot and the surrounding obstacle, and perform collision detection during parking, to prevent the vehicle from colliding with the obstacle.

In an example, the computer system 150 shown in FIG. 1 may also receive information from or transfer information to another computer system. Alternatively, the sensor data collected from the sensing system 120 of the vehicle 100 may be transferred to another computer to process the data.

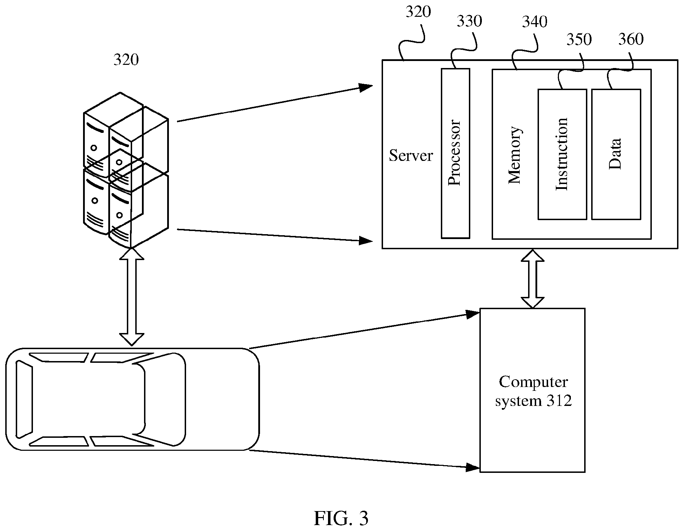

For example, as shown in FIG. 3, data from a computer system 312 may be transmitted through a network to a cloud server 320 for further processing. Networks and intermediate nodes may include various configurations and protocols, including the Internet, the World Wide Web, an intranet, a virtual private network, a wide area network, a local area network, a private network using a proprietary communication protocol of one or more companies, an Ethernet, Wi-Fi, HTTP, and various combinations thereof. Such communication may be implemented by any device capable of transmitting data to and from another computer, such as a modem and a wireless interface.

In an example, the server 320 may include a server such as a load balancing server cluster having a plurality of computers, and exchanges information with different nodes of the network for the purpose of receiving, processing, and transmitting data from the computer system 312. The server may be configured similar to the computer system 312, and has a processor 330, a memory 340, instructions 350, and data 360.

For example, the data 360 of the server 320 may include information related to road conditions around the vehicle. For example, the server 320 may receive, detect, store, update, and transmit the information related to the road conditions of the vehicle.

For example, the information related to the road conditions around the vehicle includes information about a parking spot and an obstacle around the vehicle, for example, may be information about a type, a size, and a location of the parking spot around the vehicle, and likewise may be information about a size and a location of the obstacle around the vehicle.

In the conventional technology, path planning is usually performed by using a geometry-based planning method or a graph search-based Hybrid A* method. The geometry-based planning method is usually used to obtain a feasible parking route by splicing several arcs and straight lines based on an initial pose, a surrounding obstacle, and a location of a parking spot of the vehicle by using geometric characteristics. Applicability of the geometry-based planning method is poor. One geometry-based method can usually be applied only to one type of environment, and cannot be solved when an environment is not in conformity with the design. In the Hybrid A* method, a discrete map needs to be built based on environment information, and then paths are obtained by performing a search based on the discrete map and vehicle characteristics. To improve accuracy of a solution, a discrete spacing of the map needs to be decreased, but a quantity of discrete points on the map is increased because of the decrease in the discrete spacing, causing a sharp increase in a quantity of search paths and a decrease in efficiency of the solution. Therefore, how to improve efficiency of a solution, namely, a success rate, of a vehicle path planning method becomes an issue to be urgently resolved.

In view of this, an embodiment of this application proposes a vehicle path planning method. Information about an intermediate pose other than an initial parking pose and a target parking pose is obtained, and segmented planning may be performed on a path between the initial parking pose and the target parking pose based on the intermediate pose. In this way, when a parking spot has narrow space and irregular parking boundaries, a vehicle is capable of traveling, by fully utilizing the space, to the parking spot in which the target parking pose is located, thereby improving a success rate of vehicle path planning.

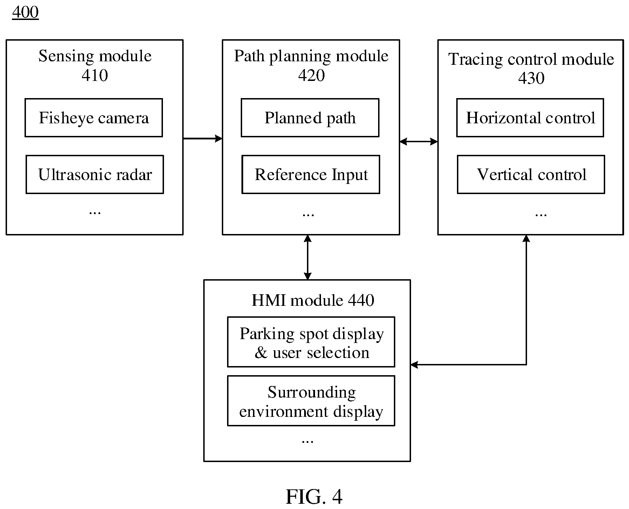

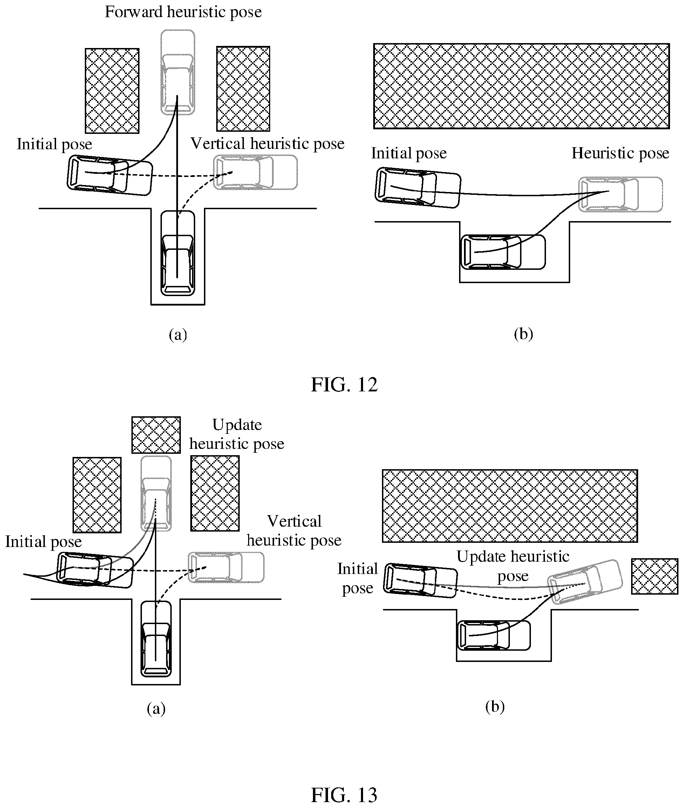

The following details the vehicle path planning methods in embodiments of this application with reference to FIG. 4 to (b) in FIG. 13.

FIG. 4 is a schematic diagram of an automatic parking system according to an embodiment of this application. The automatic parking system 400 may include a sensing module 410, a path planning module 420, a vehicle tracking module 430, and a human machine interface (human machine interface, HMI) display module 440.

The sensing module 410 may include a fisheye camera and an ultrasonic radar. The fisheye camera may be configured to identify sizes and locations of a parking spot and a surrounding obstacle. The ultrasonic radar may be configured to: sense a distance between the parking spot and the surrounding obstacle, and perform collision detection during parking to prevent a collision. Quantities of fisheye cameras and ultrasonic radars included in the sensing module are not limited in this application.

When a vehicle is a manually driven vehicle, the HMI display module 440 may be used as an interaction module between a driver and a current automatic parking assistance system, and the HMI display module 440 is configured to display an available parking spot and an environmental obstacle situation in real time. The driver can select a parking spot, observe vehicle movement, and the like by using the module. When the vehicle is a partially or fully autonomous vehicle, the automatic parking system may alternatively not include the HMI display module 440.

As shown in FIG. 4, the path planning module 420 may use the path planning method in this embodiment of this application, for example, perform path planning based on a heuristic hierarchical optimization method. The path planning module 420 may be configured to perform partial planning and global planning.

For example, when the module performs partial planning, there may be two layers for track planning: a trapping relief layer and a direct layer, and different cost function coefficients and target poses are used for the different layers. A track and reference inputs for planning are obtained at each layer through nonlinear optimization. When the partial planning fails, a feasible track and reference inputs may be obtained through heuristic planning.

It should be noted that the feasible track may be a track of a rear axle center of the vehicle under a reference system in which a corner of the parking spot is used as an origin, or may be converted into a track obtained by using an ego-vehicle coordinate system as a reference system, and includes coordinates of the rear axle center and a heading angle of the vehicle. The reference inputs include traveling distances, steering wheel angles, and traveling directions of the vehicle in a fixed sampling time, and can be converted into a reference speed, acceleration, a steering wheel angle, and a traveling direction at a time point. Summarized information may be sent to the vehicle tracking module 430 for tracking the track.

The vehicle tracking module 430 may include an electronic control unit (electronic control unit, ECU) of an engine or an ECU of a motor, an ECU of a transmission, a braking system (for example, an electronic stability control (electronic stability control, ESC) system), and a steering system (for example, an electric power steering (electric power steering, EPS) system). The vehicle tracking module 430 may obtain an actual gear (for example, forward or backward), and an input of a throttle, a brake, or the steering wheel angle by using an algorithm and based on the track and the reference input parameters that are obtained by the path planning module 420.

The vehicle path planning method and a vehicle path planning apparatus in embodiments of this application can be applied to an automatic parking scenario. The automatic parking may mean that a vehicle can detect information about a surrounding parking spot and obstacle without requiring intervention by a driver or requiring little intervention by a driver, and control the input parameters of the vehicle to automatically travel to the parking spot based on a track path.

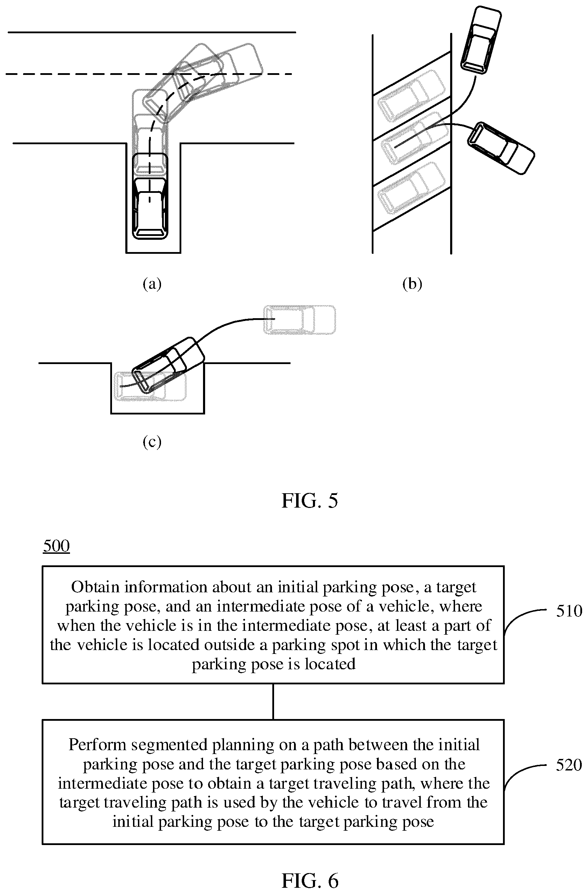

For example, as shown in FIG. 5, different traveling paths may be planned based on different parking spot types. (a) in FIG. 5 shows a vertical parking spot, (b) in FIG. 5 shows an oblique parking spot, and (c) in FIG. 5 shows a horizontal parking spot. It should be understood that FIG. 5 is an example for description, and an initial parking pose and a location of a parking spot are not limited in this application.

The following details the vehicle path planning method in this embodiment of this application with reference to FIG. 6. The path planning method shown in FIG. 6 may be performed by the vehicle shown in FIG. 1 or the autonomous driving system shown in FIG. 2. The method shown in FIG. 6 includes steps 510 and 520. The following separately details these steps.

Step 510: Obtain information about an initial parking pose, a target parking pose, and an intermediate pose of a vehicle.

When the vehicle is in the intermediate pose, at least a part of the vehicle is located outside a parking spot in which the target parking pose is located.

It should be noted that the intermediate pose is a pose other than the initial parking pose and the target parking pose. When the vehicle is in the intermediate pose, at least a part of the vehicle is located outside the parking spot, and this may mean: The vehicle is located entirely outside the parking spot, or a part of the vehicle is located outside the parking spot and the other part of the vehicle is located inside the parking spot.

For example, the information about the initial parking pose may refer to a horizontal coordinate and a vertical coordinate of a rear axle center and a heading angle of the vehicle when the vehicle is initially parked. The target parking pose may refer to a horizontal coordinate and a vertical coordinate of the rear axle center and a heading angle of the vehicle when the vehicle successfully travels to the parking spot.

Step 520: Perform segmented planning on a path between the initial parking pose and the target parking pose based on the intermediate pose to obtain a target traveling path.

The target traveling path may be used by the vehicle to travel from the initial parking pose to the target parking pose.

In this application, segmented planning may be performed on the global path between the initial parking pose and the target parking pose based on the intermediate pose, to obtain segmented traveling tracks, and the target traveling path may be obtained by splicing the segmented traveling tracks. The target traveling path may include a first section of traveling path and a second section of traveling path. The vehicle is capable of directly traveling to the target parking pose from an intersection point of the first section of traveling path and the second section of traveling path. Directly traveling to the target parking pose may mean: The vehicle travels, without stopping, to the target parking pose by adjusting a steering wheel angle of the vehicle. In other words, the vehicle is capable of directly traveling to the target parking pose from the intersection point of the first section of traveling path and the second section of traveling path. The intersection point of the first section of traveling path and the second section of traveling path may refer to the intermediate pose.

The following describes a plurality of possible implementations of performing segmented path planning based on the intermediate pose.

Case 1

In an example, the intermediate pose is a vehicle pose in which the vehicle is capable of directly traveling out of the parking spot at a maximum steering wheel angle.

In this application, when the vehicle is in the intermediate pose, a part of the vehicle may be located outside the parking spot. The intermediate pose may be a vehicle pose in which the vehicle is capable of leaving the parking spot. In other words, by using this pose, the vehicle is capable of directly traveling to the target parking pose in the parking spot.

For example, for the vertical parking spot shown in (a) in FIG. 5, the intermediate pose may mean that the vehicle adjusts the steering wheel angle so that the vehicle does not collide with a boundary point of the parking spot.

For example, for the oblique parking spot shown in (b) in FIG. 5, the intermediate pose may mean that the vehicle adjusts the steering wheel angle so that the vehicle does not collide with a left boundary point or a right boundary point of the parking spot.

For example, for the horizontal parking spot shown in (c) in FIG. 5, the intermediate pose may mean that a front corner of the vehicle is higher than a boundary point of the horizontal parking spot so that the vehicle does not collide with the parking spot.

It should be understood that because a pose in the parking spot is usually narrow and other vehicles may be parked in a left, right, front, or rear direction of the vehicle. The intermediate pose may be a pose in which the vehicle is capable of traveling out of the parking spot and does not collide with the parking spot or other vehicles.

In an example, by using the intermediate pose, that is, the vehicle pose in which the vehicle is capable of traveling out of the parking spot at the maximum steering wheel angle, segmented planning is successfully performed between the initial parking pose and the target parking pose of the vehicle to obtain the target traveling path.

For example, path planning is performed by using the initial parking pose as a planning start point and using the intermediate pose as a planning end point, to obtain the first section of traveling path; and path planning is performed by using the intermediate pose as a planning start point and using the target parking pose as a planning end point, to obtain the second section of traveling path, where the first section of traveling path and the second section of traveling path form the target traveling path.

Case 2

In an example, when segmented planning performed by using, as the intermediate pose, the vehicle pose in which the vehicle is capable of traveling out of the parking spot at the maximum steering wheel angle fails, a preconfigured vehicle pose may be selected as the intermediate pose. The preconfigured vehicle pose may be a preconfigured vehicle pose obtained based on length information and/or width information of the parking spot. The preconfigured vehicle pose may be referred to as a heuristic pose. The vehicle may be located entirely or partially outside the parking spot when the vehicle is in the heuristic pose.

For example, the failure of segmented path planning may mean that a distance of the target traveling path obtained by performing segmented planning by using, as the intermediate pose, the vehicle pose in which the vehicle is capable of traveling out of the parking spot at the maximum steering wheel angle is excessively long, or there are a large quantity of direction switching points in a switching direction, causing poor experience of a driver. In this case, path planning may be performed based on the preconfigured vehicle pose to obtain the target traveling path.

For example, path planning is performed by using the initial parking pose as a planning start point and using the preconfigured vehicle pose as a planning end point, to obtain the first section of traveling path; and path planning is performed by using the preconfigured vehicle pose as a planning start point and using the target parking pose as a planning end point, to obtain the second section of traveling path, where the first section of traveling path and the second section of traveling path form the target traveling path.

For example, for a vertical parking spot shown in (a) in FIG. 12, the heuristic pose may be a forward heuristic pose or a vertical heuristic pose. The vehicle is capable of directly traveling to the parking spot by using the forward heuristic pose or the vertical heuristic pose.

For example, for a horizontal parking spot shown in (b) in FIG. 12, the heuristic pose may be a heuristic pose shown in the figure, and the vehicle is capable of directly traveling to the parking spot by using the heuristic pose.

It should be understood that in comparison with the case 1, in the case 2, the vehicle needs to travel a long distance in a parking scenario, and costs of parking the vehicle are also high. Therefore, the implementation in the case 1 may be preferentially used to perform segmented path planning, and when the planning fails, the case 2 is then used to perform segmented path planning, to ensure that the vehicle is capable of successfully traveling to the parking spot, thereby improving a success rate of automatic parking of the vehicle.

Case 3

In an example, to ensure that the vehicle is capable of successfully traveling to the parking spot, the preconfigured vehicle pose, namely, a heuristic pose, may be directly selected as the intermediate pose. To be specific, after parking starts, the vehicle may first travel to the heuristic pose, and then the vehicle may directly travel from the heuristic pose to the parking spot.

Optionally, the preconfigured vehicle pose may be obtained through preconfiguration performed based on length information and width information of the parking spot in which the target parking pose is located.

Further, after a surrounding environment of the parking spot or the vehicle changes, for example, when an obstacle appears near the heuristic pose, a vehicle pose in which the vehicle collides with the obstacle or a vehicle pose in the switching direction may be configured as an updated preconfigured vehicle pose. In other words, when the vehicle in the heuristic pose collides with the obstacle, the collision pose or the vehicle pose in the switching direction may be configured as an updated heuristic pose.

For example, for a vertical parking spot shown in (a) in FIG. 13, the updated heuristic pose may be a new heuristic pose.

For example, for a horizontal parking spot shown in (b) in FIG. 13, the updated heuristic pose may be a new heuristic pose.

In the foregoing different implementations, different target traveling paths may be planned for the vehicle in the automatic parking scenario, and segmented planning may be performed on the global path between the initial parking pose and the target parking pose based on the intermediate pose, to ensure that the vehicle is capable of successfully traveling to the parking spot, thereby improving a success rate of automatic parking of the vehicle.

Optionally, the performing segmented planning on a path between the initial parking pose and the target parking pose based on the intermediate pose to obtain a target path includes: using the initial parking pose as a planning start point and using the intermediate pose as a planning end point, to obtain the first section of traveling path; using the intermediate pose as a planning start point and using the initial parking pose as a planning end point, to obtain the second section of traveling path; and obtaining the target traveling path based on the first section of traveling path and the second section of traveling path.

Further, to avoid poor user experience caused by a plurality of times of parking of the vehicle during automatic parking and to ensure that a curvature of the planned traveling path is continuous, when the first section of traveling path and the second section of traveling path are planned, input parameters of the vehicle may be constrained, so that the input parameters of the vehicle satisfy a dynamics characteristic of the vehicle, thereby improving user experience.

For example, input parameters of the vehicle on the first section of traveling path and/or the second section of traveling path satisfy a preset threshold, where the input parameters include a speed and the steering wheel angle of the vehicle.

In this embodiment of this application, when partial path planning is performed, the input parameters may be constrained, so that a generated same-direction track curvature gradually changes, and an actual characteristic constraint on the vehicle is satisfied. This is conducive to vehicle tracking, thereby improving user experience of a driver or a passenger.

It should be noted that the preset threshold that the input parameters satisfy may be determined based on a change rate of the steering wheel angle of the vehicle and/or a change rate of a wheel angle of the vehicle.

For example, when a traveling direction of the vehicle remains unchanged, the input parameters may be constrained based on a change rate of a front wheel angle and the change rate of the steering wheel angle.

For example, when the traveling direction of the vehicle changes, the input parameters may be constrained based on the front wheel angle. Optionally, the vehicle may be controlled to travel to the target parking pose based on the target traveling path.

According to the path planning method provided in this embodiment of this application, the information about the intermediate pose other than the initial parking pose and the target parking pose is obtained, and segmented planning may be performed on the path between the initial parking pose and the target parking pose based on the intermediate pose. In this way, when the parking spot has narrow space and irregular parking boundaries, the vehicle is capable of traveling, by fully utilizing the space, to the parking spot in which the target parking pose is located, thereby improving a success rate of vehicle path planning.

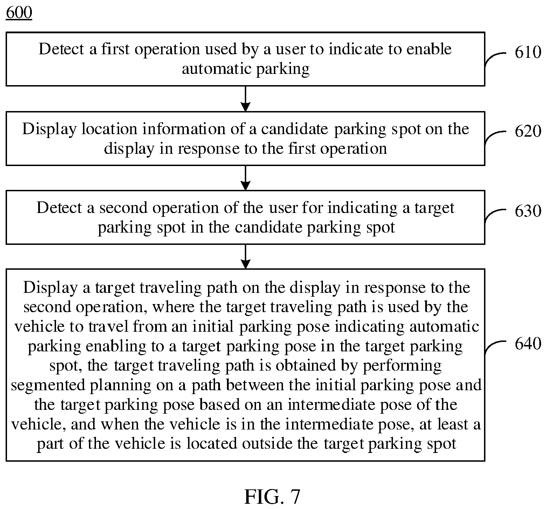

FIG. 7 is a schematic flowchart of a path planning method according to an embodiment of this application. The path planning method 600 shown in FIG. 7 includes steps 610 to 640. The following separately details these steps.

Step 610: Detect a first operation used by a user to indicate to enable automatic parking.

Step 620: Display location information of a candidate parking spot on a display in response to the first operation.

For example, after the user indicates a vehicle to enable automatic parking, current information about an available parking spot and an environmental obstacle around the vehicle may be displayed on an HMI interface (for example, a display) of the vehicle.

It should be understood that the first operation used by the user to indicate to enable automatic parking may include: pressing an automatic parking button in the vehicle by the user, carrying out an action by the user for indicating, by using a voice, the vehicle to perform automatic parking, or carrying out another action by the user for indicating the vehicle to perform automatic parking. The foregoing is an example for description, and does not constitute any limitation on this application.

Step 630: Detect a second operation of the user for indicating a target parking spot in the candidate parking spot.

For example, the second operation used by the user to indicate the target parking spot in the candidate parking spot may include: tapping the target parking spot on the HMI interface by the user, carrying out an action by the user for indicating the target parking spot in the candidate parking spot by using a voice, or carrying out another action by the user for indicating the target parking spot in the candidate parking spot. The foregoing is an example for description, and does not constitute any limitation on this application.

Step 640: Display a target traveling path on the display in response to the second operation.

The target traveling path is used by the vehicle to travel from an initial parking pose indicating automatic parking enabling to a target parking pose in the target parking spot, the target traveling path is obtained by performing segmented planning on a path between the initial parking pose and the target parking pose based on an intermediate pose of the vehicle, and when the vehicle is in the intermediate pose, at least a part of the vehicle is located outside the target parking spot.

It should be understood that the target traveling path may be obtained according to the path planning method shown in FIG. 6.

Further, the vehicle may obtain a track and reference inputs of the vehicle based on the target traveling path, and obtain an actual gear (for example, forward or backward), and an input of a throttle, a brake, a steering wheel angle, or the like of the vehicle by using an algorithm, to control vehicle automatic parking.

Optionally, in a possible implementation, the intermediate pose is a vehicle pose in which the vehicle is capable of traveling out of the target parking spot at a maximum steering wheel angle.

Optionally, in a possible implementation, the target traveling path is obtained by performing planning based on a preconfigured vehicle pose when the segmented planning performed based on the intermediate pose fails, and the preconfigured vehicle pose is obtained based on length information and width information of the target parking spot.

Optionally, in a possible implementation, the intermediate pose is a vehicle pose that is preconfigured based on length information and width information of the parking spot.

Optionally, in a possible implementation, when the vehicle collides with an obstacle in the preconfigured vehicle pose, a collision pose of the vehicle or a vehicle pose in a switching direction is configured as an updated preconfigured vehicle pose.

Optionally, in a possible implementation, the target traveling path includes a first section of traveling path and a second section of traveling path, where the first section of traveling path is obtained by performing path planning by using the initial parking pose as a planning start point and using the intermediate pose as a planning end point, and the second section of traveling path is obtained by performing path planning by using the intermediate pose as a planning start point and using the target parking pose as a planning end point.

Optionally, in a possible implementation, input parameters of the vehicle on the first section of traveling path and/or the second section of traveling path satisfy a preset threshold, where the input parameters include a speed and the steering wheel angle of the vehicle.

It should be noted that an extension, a limitation, an explanation, and a description of related content in FIG. 6 are also applicable to same content in FIG. 7. Details are not described herein again.

According to the path planning method provided in this embodiment of this application, the information about the intermediate pose other than the initial parking pose and the target parking pose is obtained, and segmented planning may be performed on the path between the initial parking pose and the target parking pose based on the intermediate pose. In this way, when the parking spot has narrow space and irregular parking boundaries, the vehicle is capable of traveling, by fully utilizing the space, to the parking spot in which the target parking pose is located, thereby improving a success rate of vehicle path planning.

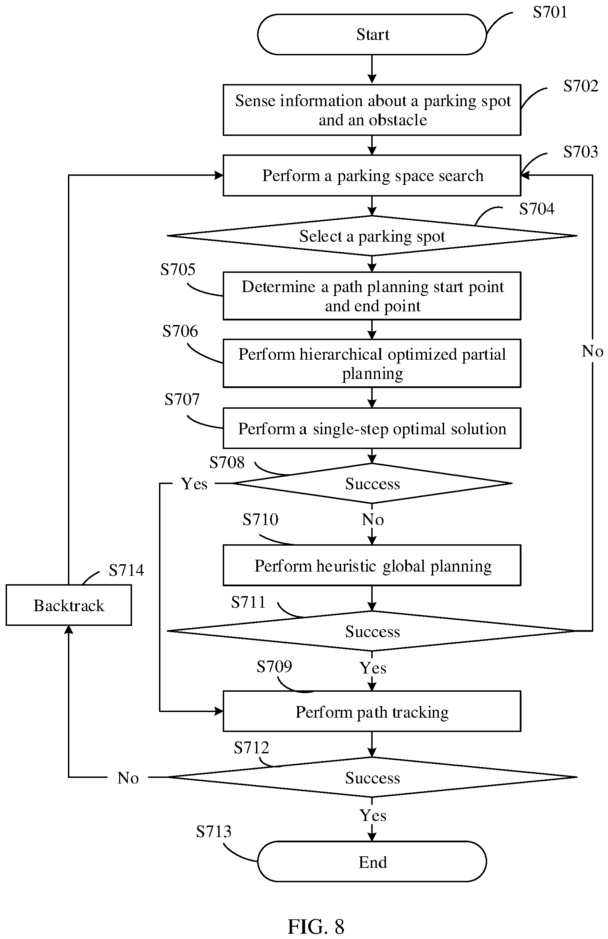

FIG. 8 is a schematic flowchart of a vehicle path planning method according to an embodiment of this application. The method may be performed by the vehicle shown in FIG. 1 or the autonomous driving system shown in FIG. 2. The method shown in FIG. 8 includes steps 701 to 714. The following separately details these steps.

Step 701: Start. To be specific, a vehicle enables an automatic parking mode.

Step 702: Sense information about a parking spot and an obstacle.

A sensing system in the vehicle, for example, a fisheye camera and an ultrasonic radar (an optional laser radar), may detect a surrounding environment of the vehicle, to obtain the information about the obstacle and the parking spot, such as a location of the obstacle, a length of the parking spot, and a width of the parking spot.

In an example, an automatic parking system may prompt a driver to limit a speed to a small value and to drive slowly through the parking spot, thereby improving detection precision of the surrounding environment.

Step 703: Perform a parking space search (that is, a parking spot search).

For example, the automatic parking system may perform preliminary screening based on information such as the length, a width, a distance, and a type of the parking spot (for example, including a vertical parking spot, a parallel parking spot, or a vertical parking spot). If the parking spot satisfies a corresponding requirement, step S704 is performed.

Step 704: Select a parking spot.

For example, the automatic parking system may summarize the information about the parking spot, and feed back and display the information about the parking spot on a central control HMI interface of the vehicle by integrating images of the fisheye camera. The vehicle parking system prompts the driver to select an intended parking spot.

Step 705: Determine a path planning start point and end point.

For example, the automatic parking system may determine poses of a parking start point and a parking end point based on the parking spot selected by the driver, and start to generate a planned track in a parking scenario.

Step 706: Perform hierarchical optimized partial planning.

For example, the automatic parking system may first attempt to perform partial planning, and classify the planned track into two layers: a trapping relief layer and a direct layer. The trapping relief layer means that the vehicle in the parking spot is more constrained by a boundary of the parking spot. The direct layer means that the vehicle is less constrained than in the trapping relief layer. An intersection point of the trapping relief layer and the direct layer allows the vehicle to directly travel out of the parking spot.

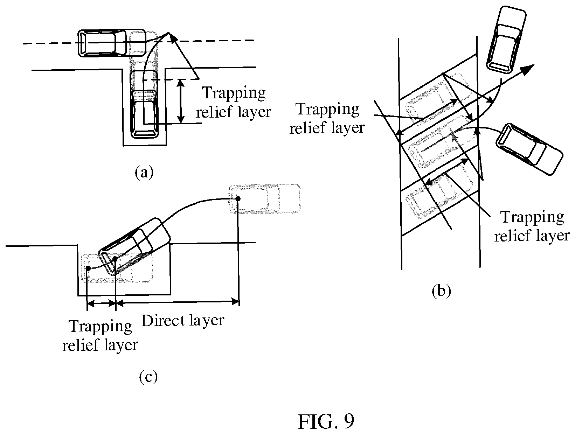

FIG. 9 is a schematic diagram of a trapping relief layer and a direct layer in hierarchical planning according to an embodiment of this application.

For example, as shown in (c) in FIG. 9, a principle of parking in a horizontal parking spot is similar to that of parking in a vertical parking spot, but a configured pose in the horizontal parking spot when the vehicle travels out leftward or rightward may be different from that in the vertical parking spot. A configured target pose may be expressed as a formula (1).

For example, as shown in (a) in FIG. 9, a trapping relief layer in a vertical parking spot is used to increase a heading angle of the vehicle until a corner of a vehicle head is higher than a parking boundary. A configured target pose may be expressed as a formula (2).

For example, as shown in (b) in FIG. 9, a trapping relief layer in an oblique parking spot is used to enable the vehicle to go straight until the vehicle reaches a location ($x>x_{set}$) at which the vehicle is capable of directly traveling out of a vertical parking spot at a maximum angle (either leftward or rightward). A configured target pose may be expressed as a formula (3). The formulas (1), (2), and (3) are as follows:

$$q_C = \begin{bmatrix} 0 \\ 0 \\ \dfrac{\pi}{2} \end{bmatrix} \tag{1}$$

$$q_C = \begin{bmatrix} x_{set} \\ 0 \\ 0 \end{bmatrix} \tag{2}$$

$$q_C = \begin{bmatrix} x_{set} \\ 0 \\ 0 \end{bmatrix}, \quad x_{set} = \begin{cases} x_{setl} \\ x_{setr} \end{cases} \tag{3}$$

Further, for a direct layer, an initial parking pose of the vehicle may be configured as the target pose, that is, the initial parking pose shown in FIG. 6.

It should be understood that a target parking pose of the vehicle to the initial parking pose of the vehicle may be planned in FIG. 9. If the vehicle can safely travel from the parking spot to the initial parking pose, the vehicle can also travel from the initial parking pose to the target parking pose in the path. A target traveling path on which the vehicle travels to the parking spot may be obtained through backward reasoning by using a target traveling path on which the vehicle travels out of the parking spot. A vehicle pose at the intersection point of the trapping relief layer and the direct layer is determined more easily based on a size of the vehicle and a size of the parking spot when the path on which the vehicle travels out of the parking spot is planned. This simplifies a path planning procedure.

Step 707: Perform a single-step optimal solution. To be specific, the track is discretely solved at the trapping relief layer or the direct layer.

For example, in a discrete time interval, a nonlinear optimal solution may be performed in each single step according to vehicle dynamics, and discrete tracks obtained by using single-step solutions are spliced to obtain a final parking track, namely, the target traveling path.

Specifically, the single-step optimal solution process may include step 7071 to step 7074.

Step 7071: Establish a vehicle state iterative equation according to the vehicle dynamics, as shown in a formula (4):

$$q_{i+1} = \begin{pmatrix} x_{i+1} \\ y_{i+1} \\ \theta_{i+1} \end{pmatrix} = \begin{pmatrix} x_i + Ds_i \cos\left(\theta_i + \dfrac{Ds_i u_i}{2}\right) \\ y_i + Ds_i \sin\left(\theta_i + \dfrac{Ds_i u_i}{2}\right) \\ \theta_i + Ds_i u_i \end{pmatrix} \tag{4}$$

$$u_i = \frac{\tan(\delta_i)}{L} \tag{5}$$

$q_{i+1}$ represents a vehicle state at a moment (i+1); $x_{i+1}$ and $y_{i+1}$ represent a horizontal coordinate and a vertical coordinate of a rear axle center of the vehicle, respectively; $\theta_{i+1}$ represents a heading angle of the vehicle; $D_i$ represents a traveling direction of the vehicle at a moment i, where $D_i \in \{-1, 1\}$; it indicates that the vehicle travels forward when $D_i$ is 1, and it indicates that the vehicle is reversed when $D_i$ is -1; $s_i$ represents a traveling distance of the vehicle; $u_i$ is related to a steering wheel angle input; L represents a traveling distance of the vehicle at the moment i; and $\delta_i$ represents a steering

wheel angle of the vehicle at the moment i, as shown in a formula (5). A control input of the iterative equation is u, and $u = [u_i, s_i]^T$.

It should be noted that, as shown in the formula (5), u may represent a function relationship between a speed and the steering wheel angle of the vehicle.

It should be understood that cost function coefficient matrices for the trapping relief layer and the direct layer are different.

Step 7072: Establish a cost function for single-step optimization, as shown in the following formula (6):

$$l_{O_i}(q_{i+1}) = e_{P_{i+1}}^T \mathbf{R} e_{P_{i+1}} + r_u \Delta u_i^2 \qquad (6)$$

$r_u$ represents a control quantity influence coefficient, as shown in a formula (7); R represents a cost function coefficient matrix, as shown in a formula (8); and $e_{P_{i+1}}$ represents a deviation between a current pose $q_{i+1}$ and a target pose $q_c$ of the vehicle. The formulas (7) and (8) are as follows:

$$e_{P_{i+1}} = q_C - q_{i+1} \qquad (7)$$

$$R = \begin{bmatrix} r_x & 0 & 0 \\ 0 & r_y & 0 \\ 0 & 0 & r_\theta \end{bmatrix} \qquad (8)$$

Step 7073: During single-step optimization, input parameters need to be constrained, and that the vehicle does not collide with the obstacle needs to be ensured.

For example, for $s_i$, $s_i \in [s_{min}, s_{max}]$ needs to hold true, where $s_{min}$ represents a distance traveled in a time interval based on a minimum speed limit of the vehicle, and $s_{max}$ represents a distance traveled in a time interval based on a maximum speed limit of the vehicle.

Further, when the traveling direction remains unchanged, $u_i$ needs to be constrained by a change rate of a front wheel angle and a change rate of the steering wheel angle, and needs to satisfy constraints shown in formulas (9) and (10).

When the traveling direction changes, that is, when $D_i = -D_{i-1}$, , $u_i$ needs to satisfy the constraint shown in the formula (10). The formulas (9) and (10) are as follows:

$$-\zeta_{max} \le \frac{\arctan(Lu_i) - \arctan(Lu_{i-1})}{T_s} \le \zeta_{max} \qquad (9)$$

$$-\delta_{max} \le \arctan(Lu_i) \le \delta_{max} \qquad (10)$$

$T_s$ represents a discrete time interval; $\zeta_{max}$ represents a maximum change rate of the steering wheel angle; and $\delta_{max}$ represents a maximum steering wheel angle.

The collision constraint is related to a shape and a location of the obstacle that are obtained by the sensing system. During single-step optimization, a Minkowski difference between a contour of the vehicle and the obstacle at a next moment may be checked to determine whether an origin is included. The origin may be an origin of a coordinate system, and the coordinate system may be a coordinate system relative to the parking spot. If the origin is included, it indicates that a collision may occur in this pose.

Step 7074: An optimization policy in a single-step iteration may be shown in formulas (11) to (14):

$$\min_{u_i} l_{O_i}(q_{i+1}) \qquad (11)$$

$$s.t. q_{i+1} = f(q_i, u_i, D_i) \qquad (12)$$

$$h_P\left(q_{i+1}\right) \le 0 \qquad\qquad (13)$$

$$u_{\min} \le u_i \le u_{\max} \qquad\qquad (14)$$

The formula (12) is the iterative equation in step 6071, the formula (13) represents the collision constraint in step 7073, and the formula (14) represents the input parameter constraint in step 7073.

Step 708: Determine whether the partial planning succeeds, and if the partial planning succeeds, perform step 709; or if the partial planning fails, perform step 710.

For example, whether the parking track can be successfully planned is determined. If the parking track can be successfully planned, the parking track is stored, and then the automatic parking system performs operations to start path tracking. Otherwise, step 710 is performed for heuristic global planning.

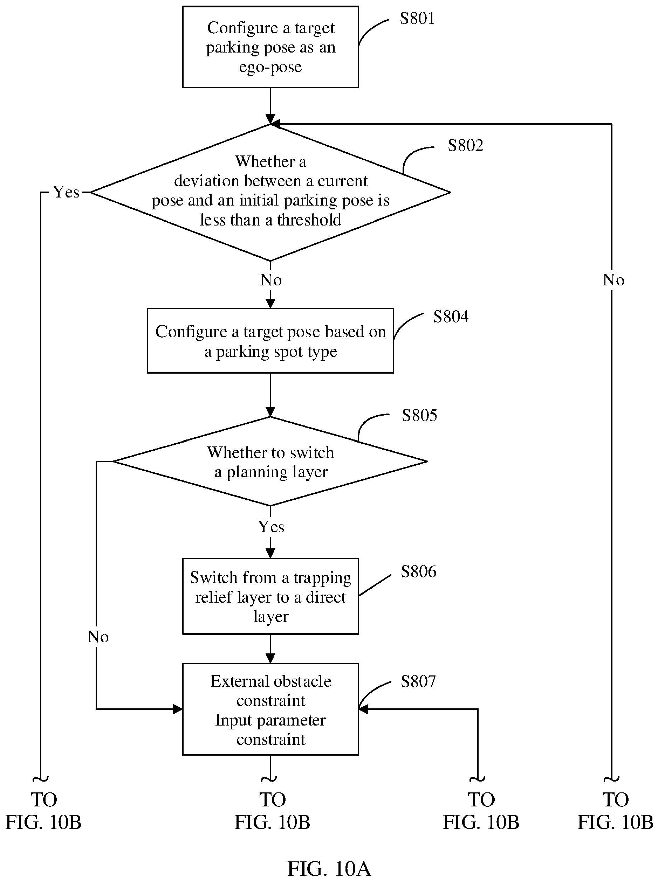

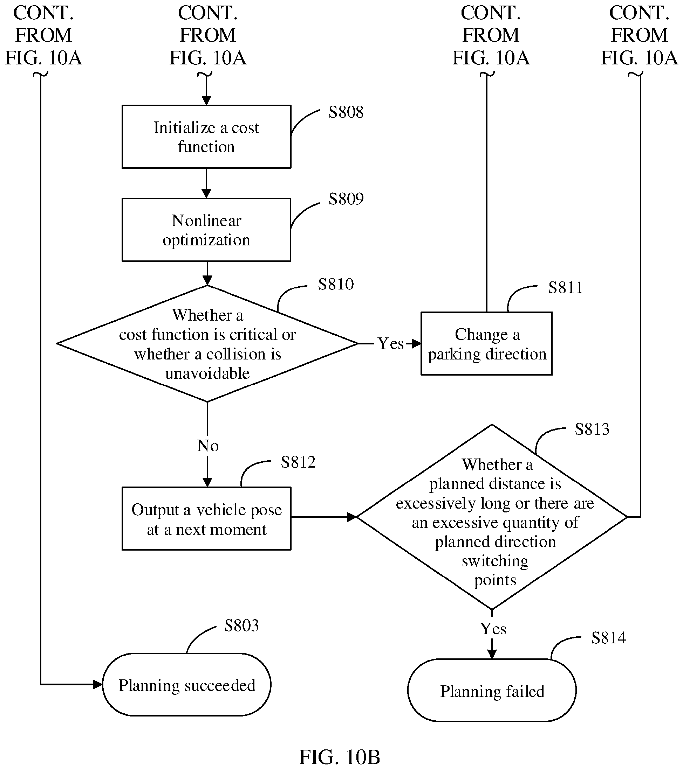

For a schematic flowchart of the partial planning, refer to FIG. 10A and FIG. 10B. The following details the procedure for the partial planning.

Step 709: Perform path tracking.

For example, when the hierarchical optimized partial planning succeeds, planned paths for the trapping relief layer and the direct layer may be separately solved, and a target traveling track may be obtained by splicing the two planned paths. The automatic parking system controls, by using the tracking control module 430 shown in FIG. 4, the vehicle to travel based on the target traveling track.

Step 710: When the hierarchical partial planning fails, perform heuristic global planning.

For example, a failure of the hierarchical partial planning may mean that a condition 1 and/or a condition 2 are/is satisfied.

Condition 1: A planned distance is excessively long, that is, $\sum_{i=1}^{n} S_i$ is greater than a limit value.

Condition 2: There are an excessive quantity of planned direction switching points, that is, a quantity of points of $D_i \ne D_{i+1}$ is greater than a threshold.

In this application, when the solving fails or there are an excessive quantity of direction switching points in a direction, user experience of the driver is poor. In this case, heuristic planning may be performed to improve a success rate of automatic parking.

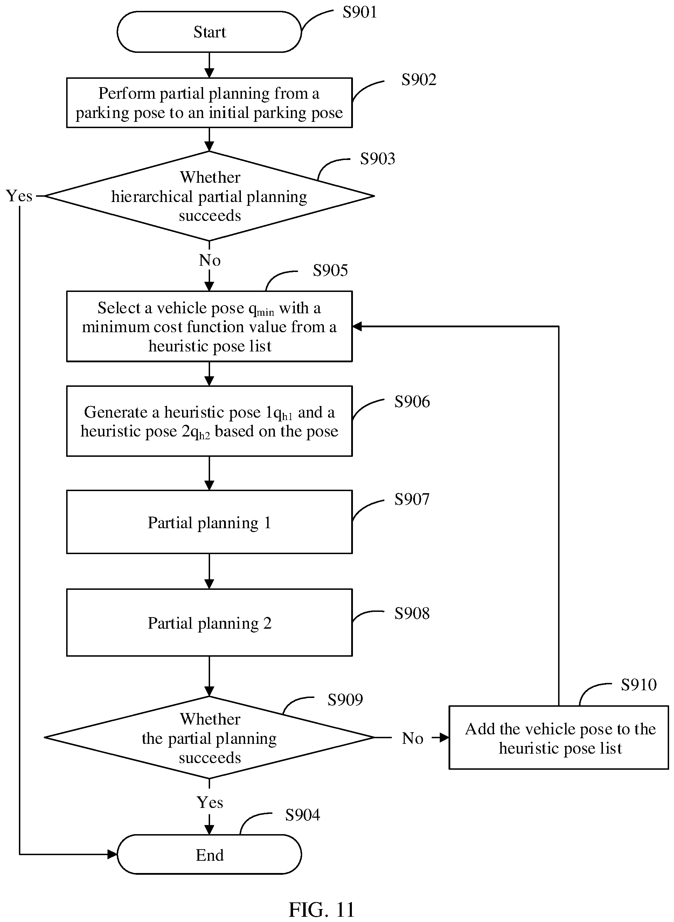

For a schematic flowchart of the heuristic global planning, refer to FIG. 11. The following details the procedure for the partial planning.

Step 711: Determine whether the heuristic path planning succeeds, and if the heuristic path planning succeeds, perform step 709; or if the heuristic path planning fails, go back to perform step 703.

Step 712: Determine whether the vehicle successfully performs path tracking, and if the path tracking succeeds, perform step 713; or if the path tracking fails, perform step 714 to backtrack, and perform step 703 again to perform a parking spot search.

Step 713: End the path planning for the automatic parking system.

It should be understood that the foregoing descriptions provided by using FIG. 8 as an example are intended to help a person skilled in the art understand embodiments of this application, but not to limit embodiments of this application to the illustrated specific values or specific scenarios. It is clear that a person skilled in the art can make various equivalent modifications or variations based on the given example, and these modifications or variations also fall within the scope of embodiments of this application.

FIG. 10A and FIG. 10B are a schematic flowchart of a partial path planning method according to an embodiment of this application. The method may be performed by the vehicle shown in FIG. 1 or the autonomous driving system shown in FIG. 2.

It should be understood that the flowchart of the partial path planning shown in FIG. 10A and FIG. 10B may be a flowchart of partial planning in which the hierarchical optimized partial planning in step 706 shown in FIG. 8 is combined with the single-step optimal solution in step 707 shown in FIG. 8. The method shown in FIG. 10A and FIG. 10B includes steps 801 to 814. The following separately details these steps.

Step 801: Configure a target parking pose as an ego-pose.

Step 802: Determine whether a deviation between a current vehicle pose and an initial parking pose of a vehicle is less than a threshold, and if the deviation is less than the threshold, perform step 803; or if the deviation is greater than the threshold, perform step 804.

It should be understood that during hierarchical optimized partial planning, the target parking pose of the vehicle to the initial parking pose of the vehicle may be planned. In other words, planning may be performed by using the target parking pose as a planning start point and using the initial parking pose as a planning end point. If the deviation between the current vehicle pose and the initial parking pose is less than the threshold, it may indicate that a planned path enables the vehicle to successfully travel out of a parking spot. Likewise, the planned path also enables the vehicle to travel from the initial parking pose to the parking spot.

Step 803: The planning succeeds.

For example, when the path planning for automatic parking succeeds, a parking path may be stored, and then a system performs operations, so that the vehicle starts path tracking.

Step 804: Configure a target pose based on a parking spot type.

When the deviation between the current vehicle pose and the initial parking pose of the vehicle is greater than the threshold, it indicates that the vehicle path planning fails. In this case, a parking spot search may need to be performed again, and the target pose is configured based on the selected parking spot type.

For example, target poses for different parking spot types are shown in FIG. 9.

For example, as shown in (a) in FIG. 9, the trapping relief layer in the vertical parking spot is used to increase a heading angle of the vehicle until a corner of a vehicle head is higher than a boundary of the parking spot. A configured target pose may be expressed as the foregoing formula (2).

For example, as shown in (b) in FIG. 9, the trapping relief layer in the oblique parking spot is used to enable the vehicle to go straight until the vehicle reaches a location ($x > x_{set}$) at which the vehicle is capable of directly traveling out of a vertical parking spot at a maximum angle (either leftward or rightward). A configured target pose may be expressed as the foregoing formula (3).

For example, as shown in (c) in FIG. 9, a principle of parking in the horizontal parking spot is similar to that of parking in a vertical parking spot, but a configured pose in the horizontal parking spot when the vehicle travels out leftward or rightward may be different from that in the vertical parking spot. A configured target pose may be expressed as the foregoing formula (1).

Step 805: Determine whether to switch a planning layer, and if the planning layer needs to be switched, perform step 806; or if the planning layer does not need to be switched, perform step 807.

For example, whether the vehicle is at the trapping relief layer or the direct layer shown in FIG. 9 may be determined based on the current pose of the vehicle. Target poses of the vehicle are different for the different layers.

Step 806: Switch the planning layer from the trapping relief layer to the direct layer.

Step 807: Determine an external obstacle constraint and an input parameter constraint.

For specific steps, refer to step 7071 to step 7074 in FIG. 8, that is, refer to the foregoing formula (4) to the foregoing formula (14).

Step 808: Initialize a cost function.

For example, the cost function may be shown in the foregoing formula (6) in step 7072 in FIG. 8. Details are not described herein again.

Step 809: Perform nonlinear optimization on the cost function.

For example, the nonlinear optimization process may be shown in the foregoing formula (9) and the foregoing formula (10) in step 7073 in FIG. 8. Details are not described herein again.

Step 810: Determine whether the cost function is critical or whether a collision is unavoidable, and if the cost function is critical or a collision is unavoidable, perform step 811 to change a parking direction; otherwise, perform step 812.

Step 811: Change the parking direction.

For example, it is found through path planning that a collision is unavoidable in the current parking direction, and in this case, the parking direction of the vehicle may be changed.

It should be understood that policies for changing a traveling direction are different for the trapping relief layer and the direct layer. For example, for the trapping relief layer, when a feasible solution cannot be obtained in the current traveling direction, that is, when a collision may occur, the direction needs to be changed. For example, for the direct layer, when a feasible solution cannot be obtained in the current traveling direction, that is, when a collision may occur, the direction and the cost function need to be changed.

Nonlinear optimization is performed to keep the cost function declining, so that there can be an exploration capability in one direction for the planning and falling into a state of oscillation can be avoided. For example, the direction is changed when a formula (15) is satisfied, where $l_{min}$ represents a minimum cost for the direction and the stage, as shown in a formula (16). The formula (15) and the formula (16) are as follows:

$$l_{O_i}\left(q_{i+1}\right) \geq k l_{min} \tag{15}$$

$$l_{min} = min\left\{l_m, \ l_{m+1}, \ ..l_i\right\}, \ D_m = D_{m+1}, \ ... = D_i \tag{16}$$

Step 812: Output a vehicle pose at a next moment.

When a vehicle pose at a moment i obtained through planning in step 807 to step 809 satisfies the external obstacle constraint and the input parameter constraint, a vehicle pose at the next moment, namely, a moment (i+1), may be planned.

Step 813: Determine whether a planned distance is excessively long or there are an excessive quantity of planned direction switching points, and if the planned distance is excessively long or there are an excessive quantity of planned direction switching points, perform step 814, that is, the planning fails; otherwise, perform step 802.

It should be noted that, when the planned distance is excessively long or there are an excessive quantity of planned direction switching points in a direction, experience of a driver or a person in the vehicle is poor. In this case, it may be considered that the partial planning fails.

Further, heuristic global planning may be performed when the hierarchical partial planning fails. For the heuristic planning, a heuristic pose for parking the vehicle needs to be selected based on a type and a size of the parking spot. The following details a procedure for a heuristic path planning method with reference to FIG. 11.

FIG. 11 is a schematic flowchart of a heuristic path planning method according to an embodiment of this application. The method may be performed by the vehicle shown in FIG. 1 or the autonomous driving system shown in FIG. 2. The method shown in FIG. 11 includes steps 901 to 910. The following separately details these steps.

Step 901: Start.

Step 902: Perform hierarchical partial planning from a target parking pose to an initial parking pose, that is, perform the hierarchical partial planning method shown in FIG. 10A and FIG. 10B.

Step 903: Determine whether the hierarchical partial planning succeeds, and if the partial planning succeeds, perform step 904, that is, end the path planning; or if the partial planning fails, perform step 905.

Step 905: Select a vehicle pose $q_{min}$ with a minimum cost function value from a heuristic pose list.

For example, a heuristic pose selected for the first time may be obtained through configuration performed based on an actual width and length of a parking spot. If planning performed from the heuristic pose selected for the first time to the target parking pose fails, for example, if a vehicle in the heuristic pose selected for the first time collides with an obstacle, heuristic pose reselection is performed. Heuristic pose reselection may be performed based on the heuristic pose list, and the vehicle pose with the minimum cost function value is selected from the heuristic pose list.

It should be noted that a heuristic pose included in the heuristic pose list may be a pose selected before heuristic pose selection is performed this time, and path planning performed from this pose to the target parking pose fails.

For example, vehicle poses included in the heuristic pose list may be sorted based on specific cost functions, as shown in formula (17):

$$l_H = H(q) + r_S S_H + r_{sw} N_{sw} \qquad (17)$$

H(q) may be an estimated cost of this pose and a Euclidean distance may be used; rs and $r_{sw}$ may represent a distance coefficient and a direction switching point coefficient, respectively; $S_H$ may represent a distance from a parking pose to this pose; and $N_{sw}$ may represent a quantity of direction switching points.

Step 906: Generate a heuristic pose $1q_{h1}$ and a heuristic pose $2q_{h2}$ based on the vehicle pose $q_{min}$.

For example, the heuristic pose $1q_{h1}$ and/or the heuristic pose $2q_{h2}$ may be selected based on the vehicle pose $q_{min}$ and experience.

It should be understood that, whether the heuristic pose $1q_{h1}$ and the heuristic pose $2q_{h2}$ can be successfully planned is indefinite. Because an environment of an obstacle around the vehicle is continuously updated in real time, the heuristic pose $1q_{h1}$ and the heuristic pose $2q_{h2}$ may be configured based on a previous surrounding environment of the vehicle.

Step 907: Perform partial planning 1: perform planning from the vehicle pose $q_{min}$ to the heuristic pose $1q_{h1}$ and from the vehicle pose $q_{min}$ to the heuristic pose $2q_{h2}$. If the partial planning succeeds, perform step 908. If the planning fails, for example, if the vehicle in the heuristic pose $1q_{h1}$ or the heuristic pose $2q_{h2}$ collides with an obstacle, perform step 908 based on a collision pose of the vehicle.

Step 908: Perform partial planning 2: perform path planning by using the heuristic poses obtained through successful planning in step 907 or the collision pose as a planning start point and using the initial parking pose $q_s$ as a planning end point.

Step 909: Determine whether the partial planning succeeds, and if the planning succeeds, perform step 904, that is, end the path planning; or if the planning fails, perform step 910.

Step 910: Add the vehicle pose on which the planning fails and a vehicle pose in a switching direction in step 907 to the heuristic pose list, and calculate cost functions of the vehicle poses according to the formula (17).

For example, for a heuristic pose on which planning has been performed, if the planning fails, a cost function of the heuristic pose may be multiplied by a coefficient greater than 1, so that the heuristic pose is not preferentially selected when a new heuristic pose is selected next time.

For example, FIG. 12 is a schematic diagram of a heuristic pose according to an embodiment of this application. As shown in (a) in FIG. 12, for the vertical parking spot, that is, vertical parking, heuristic poses in the vertical parking spot may include the forward heuristic pose and the vertical heuristic pose. As shown in (b) in FIG. 12, for the horizontal parking spot, that is, horizontal parking, because a passage length of the horizontal parking spot is long, the heuristic pose shown in (b) in FIG. 12 may be used.

It should be noted that FIG. 12 is an example for describing the heuristic pose. The vehicle may be located entirely outside the parking spot when the vehicle is in the heuristic pose, or a part of the vehicle may be located outside the parking spot when the vehicle is in the heuristic pose. This is not limited in this application.

Further, in this embodiment of this application, if there is an obstacle near the heuristic pose, a vehicle pose that is near the heuristic pose and in which the vehicle does not collide with the obstacle may be configured as an updated heuristic pose.

FIG. 13 is a schematic diagram of generating an updated heuristic pose according to an embodiment of this application.

As shown in (a) in FIG. 13, in a vertical parking spot scenario, the vehicle is initially in the initial pose, and because there is an obstacle in a passage, an updated heuristic pose may be generated based on a location of the obstacle. Likewise, as shown in (b) in FIG. 13, in a horizontal parking spot scenario, a forward heuristic pose is updated based on location information of the obstacle to generate an updated heuristic pose.

It should be understood that the foregoing example description is intended to help a person skilled in the art understand embodiments of this application, but not to limit embodiments of this application to the illustrated specific values or specific scenarios. It is clear that a person skilled in the art can make various equivalent modifications or variations based on the given examples, and these modifications or variations also fall within the scope of embodiments of this application.

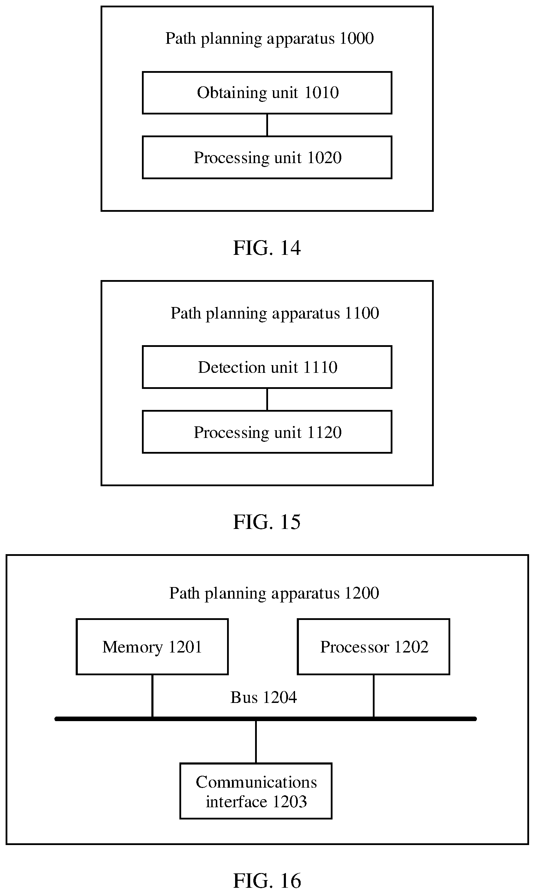

The foregoing details the vehicle path planning methods in embodiments of this application with reference to FIG. 1 to (b) in FIG. 13. The following details apparatus embodiments of this application with reference to FIG. 14 to FIG. 16. It should be understood that vehicle path planning apparatuses in embodiments of this application may perform various path planning methods in the foregoing embodiments of this application. In other words, for detailed working processes of the following products, refer to corresponding processes in the foregoing method embodiments.

FIG. 14 is a schematic block diagram of a vehicle path planning apparatus according to an embodiment of this application. It should be understood that the path planning apparatus 1000 may perform the path planning methods shown in FIG. 6 and FIG. 8 to (b) in FIG. 13. The path planning apparatus 1000 includes an obtaining unit 1010 and a processing unit 1020.

The obtaining unit 1010 is configured to obtain information about an initial parking pose, a target parking pose, and an intermediate pose of a vehicle, where when the vehicle is in the intermediate pose, at least a part of the vehicle is located outside a parking spot in which the target parking pose is located. The processing unit 1020 is configured to perform segmented planning on a path between the initial parking pose and the target parking pose based on the intermediate pose to obtain a target traveling path, where the target traveling path is used by the vehicle to travel from the initial parking pose to the target parking pose.

Optionally, in an embodiment, the intermediate pose is a vehicle pose in which the vehicle is capable of traveling out of the parking spot at a maximum steering wheel angle.

Optionally, in an embodiment, the processing unit 1020 is specifically configured to:
when the segmented planning performed based on the intermediate pose fails, perform path planning based on a vehicle pose that is preconfigured based on length information and width information of the parking spot, to obtain the target traveling path.

Optionally, in an embodiment, the intermediate pose is a vehicle pose that is preconfigured based on length information and width information of the parking spot.

Optionally, in an embodiment, when the vehicle collides with an obstacle in the preconfigured vehicle pose, a collision pose of the vehicle is configured as an updated preconfigured vehicle pose.

Optionally, in an embodiment, the processing unit 1020 is specifically configured to:

perform path planning by using the initial parking pose as a planning start point and using the intermediate pose as a planning end point, to obtain a first section of traveling path; and
perform path planning by using the intermediate pose as a planning start point and using the target parking pose as a planning end point, to obtain a second section of traveling path, where
the first section of traveling path and the second section of traveling path form the target traveling path.

Optionally, in an embodiment, input parameters of the vehicle on the first section of traveling path and/or the second section of traveling path satisfy a preset threshold, where the input parameters include a speed and a steering wheel angle of the vehicle.

FIG. 15 is a schematic block diagram of a vehicle path planning apparatus according to an embodiment of this application. It should be understood that the path planning apparatus 1100 may perform the path planning methods shown in FIG. 7 to (b) in FIG. 13. The path planning apparatus 1100 includes a detection unit 1110 and a processing unit 1120.

The detection unit 1110 is configured to detect a first operation used by a user to instruct to enable automatic parking. The processing unit 1120 is configured to display location information of a candidate parking spot on a display in response to the first operation. The detection unit 1110 is further configured to detect a second operation of the user for indicating a target parking spot in the candidate parking spot. The processing unit 1120 is further configured to display a target traveling path on the display in response to the second operation, where the target traveling path is used by a vehicle to travel from an initial parking pose indicating automatic parking enabling to a target parking pose in the target parking spot, the target traveling path is obtained by performing segmented planning on a path between the initial parking pose and the target parking pose based on an intermediate pose of the vehicle, and when the vehicle is in the intermediate pose, at least a part of the vehicle is located outside the target parking spot.

Optionally, in an embodiment, the intermediate pose is a vehicle pose in which the vehicle is capable of traveling out of the parking spot at a maximum steering wheel angle.

Optionally, in an embodiment, the processing unit 1120 is specifically configured to:
when the segmented planning performed based on the intermediate pose fails, perform path planning based on a vehicle pose that is preconfigured based on length information and width information of the parking spot, to obtain the target traveling path.

Optionally, in an embodiment, the intermediate pose is a vehicle pose that is preconfigured based on length information and width information of the parking spot.

Optionally, in an embodiment, when the vehicle collides with an obstacle in the preconfigured vehicle pose, a collision pose of the vehicle is configured as an updated preconfigured vehicle pose.

Optionally, in an embodiment, the target traveling path includes a first section of traveling path and a second section of traveling path, where the first section of traveling path is obtained by performing path planning by using the initial parking pose as a planning start point and using the intermediate pose as a planning end point, and the second section of traveling path is obtained by performing path planning by using the intermediate pose as a planning start point and using the target parking pose as a planning end point.

Optionally, in an embodiment, input parameters of the vehicle on the first section of traveling path and/or the second section of traveling path satisfy a preset threshold, where the input parameters include a speed and a steering wheel angle of the vehicle.

It should be noted that the path planning apparatus 1000 and the path planning apparatus 1100 are embodied in forms of functional units. The term "unit" herein may be implemented in a form of software and/or hardware. This is not specifically limited.

For example, the "unit" may be a software program, a hardware circuit, or a combination thereof for implementing the foregoing function. The hardware circuit may include an application-specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, the units in the examples described in this embodiment of this application can be implemented by electronic hardware or a combination of computer software and electronic hardware. Whether the functions are executed by hardware or software depends on particular applications and design constraints of the technical solutions. A person skilled in the art may use a different method to implement the described functions for each particular application, but it should not be considered that the implementation goes beyond the scope of this application.

FIG. 16 is a schematic diagram of a structure of hardware of a vehicle path planning apparatus according to an embodiment of this application.

As shown in FIG. 16, the path planning apparatus 1200 (the path planning apparatus 1200 may be specifically a computer device) includes a memory 1201, a processor 1202, a communications interface 1203, and a bus 1204. Communication connections are implemented between the memory 1201, the processor 1202, and the communications interface 1203 through the bus 1204.

The memory 1201 may be a read-only memory (read only memory, ROM), a static storage device, a dynamic storage device, or a random access memory (random access memory, RAM). The memory 1201 may store a program. When the program stored in the memory 1201 is being executed by the processor 1202, the processor 1202 is configured to perform the steps of the path planning methods in embodiments of this application, for example, perform the steps shown in FIG. 6 to (b) in FIG. 13.

It should be understood that the path planning apparatus shown in this embodiment of this application may be a server. For example, the apparatus may be a cloud server, or may be a chip configured in a cloud server.

The processor 1202 may be a general-purpose central processing unit (central processing unit, CPU), a microprocessor, an application-specific integrated circuit (application specific integrated circuit, ASIC), or one or more integrated circuits, configured to execute a related program to implement the path planning methods in embodiments of this application.

The processor 1202 may alternatively be an integrated circuit chip and has a signal processing capability. In an implementation process, the steps of the path planning methods in this application may be completed by using an integrated logic circuit of hardware in the processor 1202 or instructions in a software form.

Alternatively, the processor 1202 may be a general-purpose processor, a digital signal processor (digital signal processing, DSP), an application-specific integrated circuit (ASIC), a field programmable gate array (field programmable gate array, FPGA), another programmable logic device, a discrete gate, a transistor logic device, or a discrete hardware component. The processor 1202 may implement or perform the methods, the steps, and the logical block diagrams that are disclosed in embodiments of this application. The general-purpose processor may be a microprocessor, or the processor may be any conventional processor or the like. Steps of the methods disclosed with reference to embodiments of this application may be directly implemented by using a hardware decoding processor, or may be implemented by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1201. The processor 1202 reads information from the memory 1201, and in combination with the hardware in the processor 1202, implements the functions that need to be performed by the units included in the path planning apparatus shown in FIG. 14 or FIG. 15 in embodiments of this application, or performs the path planning methods shown in FIG. 6 to (b) in FIG. 13 in the method embodiments of this application.

The communications interface 1203 implements communication between the path planning apparatus 1200 and another device or a communications network by using a transceiver apparatus, for example, but not limited to, a transceiver.

The bus 1204 may include a path on which information is transmitted between components (for example, the memory 1201, the processor 1202, and the communications interface 1203) of the path planning apparatus 1200.

It should be noted that although the path planning apparatus 1200 merely shows the memory, the processor, and the communications interface. However, in a specific implementation process, a person skilled in the art should understand that the path planning apparatus 1200 may further include other components necessary to implement normal running. In addition, a person skilled in the art should understand that, according to a specific requirement, the path planning apparatus 1200 may further include hardware components for implementing other additional functions.

Moreover, a person skilled in the art should understand that the path planning apparatus 1200 may alternatively include only the components necessary to implement embodiments of this application, and unnecessarily includes all the components shown in FIG. 16.

It should be understood that the foregoing example description is intended to help a person skilled in the art understand embodiments of this application, but not to limit embodiments of this application to the illustrated specific values or specific scenarios. It is clear that a person skilled in the art can make various equivalent modifications or variations based on the given examples, and these modifications or variations also fall within the scope of embodiments of this application.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that the units and algorithm steps in the examples described with reference to embodiments disclosed in this specification may be implemented by electronic hardware or a combination of computer software and electronic hardware. Whether the functions are executed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed systems, apparatuses, and methods may be implemented in another manner. For example, the described apparatus embodiments are merely examples. For example, the unit division is merely logical function division and may be other division in actual implementation. For example, a plurality of units or components may be combined or integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to an actual requirement to achieve the objectives of the solutions of embodiments.

In addition, functional modules in embodiments of this application may be integrated into one processing unit, or each of the units may exist alone physically, or at least two units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A vehicle path planning method, comprising:

   obtaining information about an initial parking pose, a target parking pose, and an intermediate pose of a vehicle, wherein when the vehicle is in the intermediate pose, at least a part of the vehicle is located outside a parking spot in which the target parking pose is located; and
   performing segmented planning on a path between the initial parking pose and the target parking pose based on the intermediate pose to obtain a target traveling path, wherein the target traveling path is used by the vehicle to travel from the initial parking pose to the target parking pose.

2. The path planning method according to claim 1, wherein the intermediate pose is a vehicle pose in which the vehicle is capable of traveling out of the parking spot at a maximum steering wheel angle.

3. The path planning method according to claim 2, wherein the performing segmented planning on a path between the initial parking pose and the target parking pose based on the intermediate pose to obtain a target traveling path comprises:
   when the segmented planning performed based on the intermediate pose fails, performing path planning based on a vehicle pose that is preconfigured based on length information and width information of the parking spot, to obtain the target traveling path.

4. The path planning method according to claim 1, wherein the intermediate pose is a vehicle pose that is preconfigured based on length information and width information of the parking spot.

5. The path planning method according to claim 3 or 4, wherein when the vehicle collides with an obstacle in the preconfigured vehicle pose, a collision pose of the vehicle is configured as an updated preconfigured vehicle pose.

6. The path planning method according to any one of claims 1 to 5, wherein the performing segmented planning on a path between the initial parking pose and the target parking pose based on the intermediate pose to obtain a target path comprises:

   performing path planning by using the initial parking pose as a planning start point and using the intermediate pose as a planning end point, to obtain a first section of traveling path; and
performing path planning by using the intermediate pose as a planning start point and using the target parking pose as a planning end point, to obtain a second section of traveling path, wherein
the first section of traveling path and the second section of traveling path form the target traveling path.

7. The path planning method according to claim 6, wherein input parameters of the vehicle on the first section of traveling path and/or the second section of traveling path satisfy a preset threshold, wherein the input parameters comprise a speed and a steering wheel angle of the vehicle.

8. A vehicle path planning method, applied to a vehicle having a display, and comprising:

   detecting a first operation used by a user to indicate to enable automatic parking;
   displaying location information of a candidate parking spot on the display in response to the first operation;
   detecting a second operation of the user for indicating a target parking spot in the candidate parking spot; and
   displaying a target traveling path on the display in response to the second operation, wherein
   the target traveling path is used by the vehicle to travel from an initial parking pose indicating automatic parking enabling to a target parking pose in the target parking spot, the target traveling path is obtained by performing segmented planning on a path between the initial parking pose and the target parking pose based on an intermediate pose of the vehicle, and when the vehicle is in the intermediate pose, at least a part of the vehicle is located outside the target parking spot.

9. The path planning method according to claim 8, wherein the intermediate pose is a vehicle pose in which the vehicle is capable of traveling out of the target parking spot at a maximum steering wheel angle.

10. The path planning method according to claim 9, wherein the target traveling path is obtained by performing planning based on a preconfigured vehicle pose when the segmented planning performed based on the intermediate pose fails, and the preconfigured vehicle pose is obtained based on length information and width information of the target parking spot.

11. The path planning method according to claim 8, wherein the intermediate pose is a vehicle pose that is preconfigured based on length information and width information of the target parking spot.

12. The path planning method according to claim 10 or 11, wherein when the vehicle collides with an obstacle in the preconfigured vehicle pose, a collision pose of the vehicle is configured as an updated preconfigured vehicle pose.

13. A vehicle path planning apparatus, comprising:

   an obtaining unit, configured to obtain information about an initial parking pose, a target parking pose, and an intermediate pose of a vehicle, wherein when the vehicle is in the intermediate pose, at least a part of the vehicle is located outside a parking spot in which the target parking pose is located; and
   a processing unit, configured to perform segmented planning on a path between the initial parking pose and the target parking pose based on the intermediate pose to obtain a target traveling path, wherein the target traveling path is used by the vehicle to travel from the initial parking pose to the target parking pose.

14. The path planning apparatus according to claim 13, wherein the intermediate pose is a vehicle pose in which the vehicle is capable of traveling out of the parking spot at a maximum steering wheel angle.

15. The path planning apparatus according to claim 14, wherein the processing unit is specifically configured to:
   when the segmented planning performed based on the intermediate pose fails, perform path planning based on a vehicle pose that is preconfigured based on length information and width information of the parking spot, to obtain the target traveling path.

16. The path planning apparatus according to claim 13, wherein the intermediate pose is a vehicle pose that is preconfigured based on length information and width information of the parking spot.

17. The path planning apparatus according to claim 15 or 16, wherein when the vehicle collides with an obstacle in the preconfigured vehicle pose, a collision pose of the vehicle is configured as an updated preconfigured vehicle pose.

18. The path planning apparatus according to any one of claims 13 to 17, wherein the processing unit is specifically configured to:

> perform path planning by using the initial parking pose as a planning start point and using the intermediate pose as a planning end point, to obtain a first section of traveling path; and
> perform path planning by using the intermediate pose as a planning start point and using the target parking pose as a planning end point, to obtain a second section of traveling path, wherein
> the first section of traveling path and the second section of traveling path form the target traveling path.

19. The path planning apparatus according to claim 18, wherein input parameters of the vehicle on the first section of traveling path and/or the second section of traveling path satisfy a preset threshold, wherein the input parameters comprise a speed and a steering wheel angle of the vehicle.

20. A vehicle path planning apparatus, used in a vehicle having a display, and comprising:

> a detection unit, configured to detect a first operation used by a user to indicate to enable automatic parking; and
> a processing unit, configured to display location information of a candidate parking spot on the display in response to the first operation, wherein
> the detection unit is further configured to detect a second operation performed by the user to indicate a target parking spot in the candidate parking spot; and
> the processing unit is further configured to display a target travel path on the display in response to the second operation, wherein
> the target traveling path is used by the vehicle to travel from an initial parking pose indicating automatic parking enabling to a target parking pose in the target parking spot, the target traveling path is obtained by performing segmented planning on a path between the initial parking pose and the target parking pose based on an intermediate pose of the vehicle, and when the vehicle is in the intermediate pose, at least a part of the vehicle is located outside the target parking spot.

21. The path planning apparatus according to claim 20, wherein the intermediate pose is a vehicle pose in which the vehicle is capable of traveling out of the target parking spot at a maximum steering wheel angle.

22. The path planning apparatus according to claim 21, wherein the target traveling path is obtained by performing planning based on a preconfigured vehicle pose when the segmented planning performed based on the intermediate pose fails, and the preconfigured vehicle pose is obtained based on length information and width information of the target parking spot.

23. The path planning apparatus according to claim 20, wherein the intermediate pose is a vehicle pose that is preconfigured based on length information and width information of the target parking spot.

24. The path planning apparatus according to claim 22 or 23, wherein when the vehicle collides with an obstacle in the preconfigured vehicle pose, a collision pose of the vehicle is configured as an updated preconfigured vehicle pose.

25. A vehicle path planning apparatus, comprising at least one processor and a memory, wherein the at least one processor is coupled to the memory, and is configured to read and execute instructions in the memory, to perform the path planning method according to any one of claims 1 to 7.

26. A vehicle path planning apparatus, comprising at least one processor and a memory, wherein the at least one processor is coupled to the memory, and is configured to read and execute instructions in the memory, to perform the path planning method according to any one of claims 8 to 12.

27. A computer-readable medium, wherein the computer-readable medium stores program code, and when the computer program code is run on a computer, the computer is enabled to perform the path planning method according to any one of claims 1 to 7.

28. A computer-readable medium, wherein the computer-readable medium stores program code, and when the computer program code is run on a computer, the computer is enabled to perform the path planning method according to any one of claims 8 to 12.

Vehicle 100

Travel system 110
- Engine 111
- Transmission apparatus 112
- Energy source 113
- Wheel 114

Sensor system 120
- Positioning system 121
- Inertial measurement unit 122
- Radar 123
- Laser rangefinder 124
- Camera 125

Control system 130
- Steering system 131
- Throttle 132
- Brake unit 133
- Computer vision system 134
- Route control system 135
- Obstacle avoidance system 136

Peripheral device 140
- Wireless communications system 141
- Vehicle-mounted computer 142
- Microphone 143
- Speaker 144

Power supply 160

User interface 170

Computer system 150
- Processor 151
- Memory 152
  - Instruction 153

FIG. 1

System memory 235

Operating system 237

Shell 239

Kernel 241

Application 243

Self-driving related program 247

203

Processor

233

Hard disk drive

231

Hard disk drive interface

System bus 205

211

Bus bridge

207

Display adapter

I/O bus

215

I/O interfaces

225

USB port

229

Network interface

209

Display

217

Input device

221

Media tray

223

Transceiver

Camera

255

253

Sensor

227

Network

249

Software deployment server

FIG. 2

EP 4 067 821 A1

29

FIG. 3

400

| Sensing module 410 | Path planning module 420 | Tracing control module 430 |
|---|---|---|
| Fisheye camera | Planned path | Horizontal control |
| Ultrasonic radar | Reference Input | Vertical control |
| ... | ... | ... |

HMI module 440

Parking spot display & user selection

Surrounding environment display

...

FIG. 4

(a)

(b)

(c)

FIG. 5

<u>500</u>

Obtain information about an initial parking pose, a target
parking pose, and an intermediate pose of a vehicle, where
when the vehicle is in the intermediate pose, at least a part of
the vehicle is located outside a parking spot in which the target
parking pose is located — 510

Perform segmented planning on a path between the initial
parking pose and the target parking pose based on the
intermediate pose to obtain a target traveling path, where the
target traveling path is used by the vehicle to travel from the
initial parking pose to the target parking pose — 520

FIG. 6

600

| Detect a first operation used by a user to indicate to enable automatic parking | ⌐ 610 |

| Display location information of a candidate parking spot on the display in response to the first operation | ⌐ 620 |

| Detect a second operation of the user for indicating a target parking spot in the candidate parking spot | ⌐ 630 |

| Display a target traveling path on the display in response to the second operation, where the target traveling path is used by the vehicle to travel from an initial parking pose indicating automatic parking enabling to a target parking pose in the target parking spot, the target traveling path is obtained by performing segmented planning on a path between the initial parking pose and the target parking pose based on an intermediate pose of the vehicle, and when the vehicle is in the intermediate pose, at least a part of the vehicle is located outside the target parking spot | ⌐ 640 |

FIG. 7

FIG. 8

(a)

Trapping
relief layer

Trapping
relief layer

Trapping
relief layer

(b)

Trapping
relief layer

Direct layer

Trapping
relief layer

(c)

FIG. 9

FIG. 10A

CONT.
FROM
FIG. 10A

CONT.
FROM
FIG. 10A

CONT.
FROM
FIG. 10A

CONT.
FROM
FIG. 10A

Initialize a cost function — S808

Nonlinear optimization — S809

Whether a cost function is critical or whether a collision is unavoidable — S810

Yes→ Change a parking direction — S811

No

Output a vehicle pose at a next moment — S812

Whether a planned distance is excessively long or there are an excessive quantity of planned direction switching points — S813

Yes

Planning succeeded — S803

Planning failed — S814

FIG. 10B

Start — S901

Perform partial planning from a parking pose to an initial parking pose — S902

Whether hierarchical partial planning succeeds — S903

Yes

No

Select a vehicle pose $q_{min}$ with a minimum cost function value from a heuristic pose list — S905

Generate a heuristic pose $1q_{h1}$ and a heuristic pose $2q_{h2}$ based on the pose — S906

Partial planning 1 — S907

Partial planning 2 — S908

Whether the partial planning succeeds — S909

No

Add the vehicle pose to the heuristic pose list — S910

Yes — S904

End

FIG. 11

Forward heuristic pose

Initial pose          Vertical heuristic pose

(a)

Initial pose          Heuristic pose

(b)

FIG. 12

Update
heuristic pose

Initial pose

Vertical
heuristic pose

(a)

Initial
pose

Update heuristic
pose

(b)

FIG. 13

Path planning apparatus 1000

Obtaining unit 1010

Processing unit 1020

FIG. 14

Path planning apparatus 1100

Detection unit 1110

Processing unit 1120

FIG. 15

Path planning apparatus 1200

Memory 1201

Processor 1202

Bus 1204

Communications interface 1203

FIG. 16

## INTERNATIONAL SEARCH REPORT

International application No.

**PCT/CN2019/122097**

### A. CLASSIFICATION OF SUBJECT MATTER

G01C 21/20(2006.01)i

According to International Patent Classification (IPC) or to both national classification and IPC

### B. FIELDS SEARCHED

Minimum documentation searched (classification system followed by classification symbols)

G01C 21

Documentation searched other than minimum documentation to the extent that such documents are included in the fields searched

Electronic data base consulted during the international search (name of data base and, where practicable, search terms used)

CNABS, CNTXT, VEN, USTXT, WOTXT, CNKI, IEEE, 台玉琢, 路径, 规划, 位姿, 姿态, 停车, 泊车, 停泊, 车库, 车位, 出口, 入口, 中间, 分段, 多, 两, 室内, 室外, 地下, 地上, 组合, 融合, 方向盘, 转角, attitude, posture, position, entrance, exit, export, route, park+, indoor, outdoor

### C. DOCUMENTS CONSIDERED TO BE RELEVANT

| Category* | Citation of document, with indication, where appropriate, of the relevant passages | Relevant to claim No. |
|---|---|---|
| Y | CN 107274716 A (CHONGQING UNIVERSITY OF POSTS AND TELECOMMUNICATIONS) 20 October 2017 (2017-10-20) description, paragraphs 46-80 | 1-28 |
| Y | CN 108961811 A (ZONGMU TECHNOLOGY (SHANGHAI) LIMITED COMPANY) 07 December 2018 (2018-12-07) description, paragraphs 37-48 | 1-28 |
| A | CN 103136955 A (NAVINFO CO., LTD.) 05 June 2013 (2013-06-05) entire document | 1-28 |
| A | CN 107618503 A (GUANGZHOU XIAOPENG MOTORS TECHNOLOGY COMPANY LTD.) 23 January 2018 (2018-01-23) entire document | 1-28 |
| A | JP 2009058492 A (ALPINE KK.) 19 March 2009 (2009-03-19) entire document | 1-28 |
| A | JP 2004012425 A (MATSUSHITA DENKI SANGYO K.K.) 15 January 2004 (2004-01-15) entire document | 1-28 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **29 August 2020** | **09 September 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/122097**

| Patent document cited in search report | | | Publication date (day/month/year) | Patent family member(s) | | | Publication date (day/month/year) |
|---|---|---|---|---|---|---|---|
| CN | 107274716 | A | 20 October 2017 | None | | | |
| CN | 108961811 | A | 07 December 2018 | None | | | |
| CN | 103136955 | A | 05 June 2013 | CN | 103136955 | B | 20 January 2016 |
| CN | 107618503 | A | 23 January 2018 | CN | 107618503 | B | 23 July 2019 |
| JP | 2009058492 | A | 19 March 2009 | JP | 4906641 | B2 | 28 March 2012 |
| JP | 2004012425 | A | 15 January 2004 | None | | | |

Form PCT/ISA/210 (patent family annex) (January 2015)